# EUROPEAN PATENT APPLICATION

(11) **EP 3 888 784 A1**
(43) Date of publication of application: **06.10.2021**
(21) Application number: 20167157.5
(22) Date of filing: 31.03.2020
(51) Int. Cl.: B01J 19/12, B01J 19/24

(54) **IMPROVED CONTINUOUS FLOW REACTOR FOR PHOTOCHEMICAL PROCESSES WITH CONCAVE-FACED SIDES**

(71) Applicant: Signify Holding B.V., 5656 AE Eindhoven (NL)
(72) Inventor: The designation of the inventor has not yet been filed
(74) Representative: Verweij, Petronella Daniëlle

(57) **Abstract**

The invention provides a reactor assembly (1) comprising a reactor (30), wherein the reactor (30) is configured for hosting a fluid (100) to be treated with light source radiation (11) selected from one or more of UV radiation, visible radiation, and IR radiation, wherein the reactor (30) comprises a reactor wall (35) which is transmissive for the light source radiation (11), wherein: (i) the reactor (30) is a tubular reactor (130), and wherein the reactor wall (35) defines the tubular reactor (130); (ii) the tubular reactor (130) is configured in a tubular arrangement (1130); and (iii) the reactor assembly (1) further comprises a reactor support element (40), wherein (a) the reactor support element (40) encloses at least part of the tubular arrangement (1130) or wherein (b) the tubular arrangement (1130) encloses at least part of the reactor support element (40); wherein part of the tubular arrangement (1130) is configured in contact with the reactor support element (40), and wherein another part of the tubular arrangement (1130) and the reactor support element (40) define one or more fluid transport channels (7).

## Description

### FIELD OF THE INVENTION

The invention relates to a photoreactor assembly and a method for treating a fluid with light source radiation.

### BACKGROUND OF THE INVENTION

Reactor systems for photo(chemical) processing a fluid are known in the art. US2016/0017266 for instance describes a photobioreactor for use in treating polluted air and producing biomass that may comprise, at least in part, a generally vertical tube or fluidic pathway, a generally vertical helical tube or fluidic pathway having a light source partially positioned within the helical fluidic pathway, a head cap assembly, and a base assembly. In one example, the light source may be a light emitting diode or a plurality of light emitting diodes (LEDs).

### SUMMARY OF THE INVENTION

Photochemical processing or photochemistry relates to the chemical effect of light. More in general photochemistry refers to a (chemical) reaction caused by absorption of light, especially ultraviolet light (radiation), visible light (radiation) and/or infrared radiation (light). Photochemistry may for instance be used to synthesize specific products. For instance, isomerization reactions or radical reactions may be initiated by light. Other naturally occurring processes that are induced by light are e.g. photosynthesis, or the formation of vitamin D with sunlight. Photochemistry may further e.g. be used to degrade/oxidize pollutants in water or e.g. air. Photochemical reactions may be carried out in a photochemical reactor or "photoreactor".

One of the benefits of photochemistry is that reactions can be performed at lower temperatures than conventional thermal chemistry and partly for that reason thermal side reactions that generate unwanted by-products are avoided.

Furthermore, commonly used light sources in photochemistry are low or medium pressure mercury lamps or fluorescent lamps. In addition to that, some reactions require a very specific wavelength region, and they may even be hampered by light from the source emitted at other wavelengths. In these cases, part of the spectrum, has to be filtered out, leading to a low efficiency and complex reactor design.

In the recent years the output of Light Emitting Diodes (LEDs), both direct LEDs with dominant wavelengths ranging for instance from UVC to IR wavelengths, and phosphor-converted LEDs, has increased drastically, making them interesting candidates for light sources for photochemistry. High fluxes can be obtained from small surfaces, especially if the LEDs can be kept at a low temperature. High fluxes though may result in extensive heat being produced in the reactor assembly and especially in the reactor, caused by absorption of the "unused" irradiation, which in turn may result in unwanted by-products and/or a reduction in the efficiency of the LEDs. A desire for cooling, may require a reconfiguration of the reactor and/or the assembly comprising the reactor.

Hence, it is an aspect of the invention to provide an alternative reactor assembly, which preferably further at least partly obviates one or more of above-described drawbacks. It is further an aspect of the invention to provide an alternative (photochemical) method for treating a fluid with light, which preferably further at least partly obviates one or more of above-described drawbacks. The present invention may have as object to overcome or ameliorate at least one of the disadvantages of the prior art, or to provide a useful alternative.

Therefore, in a first aspect, the invention provides a reactor assembly ("assembly") comprising a reactor, wherein the reactor is configured for hosting a fluid (also: reactor fluid) to be treated, especially with light source radiation. The (reactor) fluid in embodiments comprises one or more liquids. The (reactor) fluid may comprise one or more gases. In yet further embodiments, the fluid may comprise a mixture of gas(es) and liquid(s). The light source radiation may in embodiments comprise UV radiation. The light source radiation may in further embodiments (also) comprise visible radiation. In yet further embodiments, the light source radiation may (also) comprise IR radiation. In specific embodiments, the light source radiation may be selected from one or more of UV radiation, visible radiation, and IR radiation. The reactor especially comprises a reactor wall. In specific embodiments, the reactor wall is (at least partly) transmissive for the light source radiation. The reactor is especially a tubular reactor, especially wherein the reactor wall defines the tubular reactor. The tubular reactor may be configured in a tubular arrangement. In further embodiments, the reactor assembly further comprises a reactor support element ("support element"). The reactor support element may especially be configured to support the (tubular) reactor. In embodiments, the reactor support element encloses at least part of the tubular arrangement. In further specific embodiments, the tubular arrangement encloses at least part of the reactor support element. In specific embodiments, (a) part of the tubular reactor is configured in contact with the reactor support element, especially in physical contact with the reactor support element. Especially, another part of the tubular reactor is (configured) at a distance from the reactor support element. In specific embodiments, (the "another" part of) the tubular reactor and the reactor support element define one or more (temperature control) fluid transport channels, especially one or more (cooling) fluid transport channels. Especially the (another) part of the tubular reactor and the reactor support element define the one or more fluid transport channels. Therefore, especially the invention provides in embodiments a reactor assembly comprising a reactor, wherein the reactor is configured for hosting a fluid to be treated with light source radiation selected from one or more of UV radiation, visible radiation, and IR radiation, wherein the reactor comprises a reactor wall which is transmissive for the light source radiation, wherein: (i) the reactor is a tubular reactor, and wherein the reactor wall defines the tubular reactor; (ii) the tubular reactor is configured in a tubular arrangement; and (iii) the reactor assembly further comprises a reactor support element (configured to support the reactor), wherein the reactor support element encloses at least part of the tubular arrangement or wherein the tubular arrangement encloses at least part of the reactor support element, wherein part of the tubular reactor is configured in (physical) contact with the reactor support element, and wherein another part of the tubular reactor and the reactor support element define one or more (fluid control, especially cooling) fluid transport channels.

In such reactor assembly, cooling of the reactor may be performed at high efficiency. In such reactor assembly high fluxes of light/radiation may be provided to the reactor Moreover, the corresponding heat input may efficiently be dissipated. In the assembly, high temperatures of the (reactor) fluid may be prevented. The temperature of the fluid may be controlled. As such, high energy may be provided to reactants in the reactor and especially a reaction temperature may be controlled.

Especially, in specific embodiments, the reactor assembly comprises a photoreactor assembly that appears to be highly efficient in in terms of light/radiation output of the light source versus power input of the light source. The photoreactor assembly may further be highly efficient in capturing of the light/radiation by the reactants. In the reactor, reactions may be executed more efficiently compared to prior art solutions. An increased amount of energy may be provided to the reactor based on the improved cooling. A such higher yield (per time unit) of the desired product may be obtained in the reactor assembly compared to prior art systems. Further, the invention may enable achieving a higher yield of the desired product as high temperatures may otherwise facilitate thermal conversion to undesired by-products. Hence, the improved temperature control provided by the invention may limit the formation of by-products and improve the yield.

The reactor assembly may be used for treating a (reactor) fluid with light source radiation, such as in the method of the invention. The term "treating the fluid (with light source radiation)" may especially relate to irradiating the fluid with the light source radiation. The fluid especially comprises a photosensitive reactant (including photocatalyst and/or photosensitizer), especially sensitive to the light source radiation (see below). The term "(reactor) fluid" may relate to a plurality of (different) fluids. Further, the fluid may comprise a liquid and/or a gas. Moreover, the fluid may in embodiments enter the reactor as a liquid and may (partly) become gaseous when being heated in the reactor. The plurality of different fluids may be mixed and (configured to) provide a homogenous flow in the reactor during operations. In further embodiments the plurality of different fluids may be selected to provide a segmented flow in the reactor during operations. The plurality of fluids may further be selected for providing slug flow in the reactor during operations.

Hence, the fluid may comprise the liquid phase and the gaseous phase or a combination of gaseous and liquid phases. The fluid may comprise a mix of different fluids. The fluid may in embodiments comprise a homogenous mixture of different fluids. In further embodiments, the fluid may comprise a heterogenous mixture of fluids. The term "plurality" refers to two or more.

The light source radiation may be provided by (the plurality of) light sources. To efficiently provide the light source radiation to the reactor, the light sources may be arranged close to the tube. In further embodiment, e.g. the light sources may be comprised by the reactor assembly (see below). When providing light source radiation to the fluid, the light source may simultaneously provide heat and may increase the temperature in the reactor assembly and especially may (also) increase the temperature of the fluid (during operations). To control the temperature in the reactor assembly, the assembly is especially configured for dissipating heat generated in the reactor assembly. The reactor assembly is especially configured for dissipating heat from (the fluid in) the reactor (especially heat provided to the fluid).

The (coiled) tubular arrangement may comprise an elongated axis of the (especially coiled) (tubular) arrangement ("(tubular) arrangement axis"). The support element is especially configured (at least partly) encompassing the (tubular) arrangement axis. Especially, the reactor wall may contact the support element. The tube of the tubular reactor may be (thermally) connected to the support element. Such connection/contact may be provided by the configuration of the tubular reactor. The tubular reactor may e.g. be configured to fit in or around the support element, wherein the tubular reactor contacts the support element. In further embodiments, the tubular reactor may be connected to the support element by connection elements, such as (thermally conductive) straps or e.g. by snap-in connection elements or other tightening elements. In further embodiments, the support element may comprise a cavity, wherein (at least part of) the tube is (removably) arranged in the cavity.

In embodiments, the tubular reactor is arranged closer to the tubular arrangement axis than (most of) the support element. The support element may (thus also) enclose the tubular reactor. In further embodiments, (most of) the support element is arranged closer to the tubular arrangement axis than the tubular reactor. The tubular reactor may (thus) enclose the support element. In further embodiments, the support element comprises an elongated body. The reactor support element may e.g. comprise a cylindrical shaped (elongated) body, an elliptically shaped (elongated) body, or e.g. define an elongated body with another type of shape (or cross section), such as a polygonal shape. The reactor support element may comprise a reactor support body ("support body"). The tube is in embodiments, helically coiled around the reactor support element. A plurality (or one) of tube windings or turns may be configured around the reactor support element. In further embodiments, the tube is enclosed by the support element. The tube may e.g. be coiled inside the (elongated) support element.

The tubular reactor arrangement may in embodiments comprise a coiled (tubular) (reactor) arrangement. Further, the tubular arrangement may in embodiments define a circle or may have a cylindrical shape. The tubular arrangement may be or comprise a cylindrical arrangement. In further embodiments, the tubular arrangement may define any arbitrary shape, such as an ellipse, or a polygon. Yet, the tubular arrangement may especially define a circle or a polygon. The tubular arrangement may have a cylindrical shape defining the circle. Hence, in embodiments the (tubular) reactor arrangement may comprise a coiled tubular arrangement and especially also define a polygon (or e.g. a circle).

The support element may in embodiments contact the tube (or tubular reactor) at a plurality of (distinct) locations along a total length of the tube (or tubular reactor) (especially for the coiled tubular arrangement). The tube may be arranged extending from the support element at other locations of the tube. The term "part" in the phrase "part of the tubular reactor is configured in (physical) contact with the reactor support element" may especially relate to a fraction of a total length of the tubular reactor wherein at least a portion of the perimeter of the tubular reactor contacts the support element. The fraction (or part) may in embodiments be smaller than 10% of the total length, such as only 1% of the total length. Yet, in other embodiments, the fraction (part) may be larger than 10%, such as in the range of 10-30%, or even larger such as 50-80%, or even larger. The fraction (part) is especially smaller than 99%, such as smaller than 95% or even smaller than 90%. The tubular reactor may contact the support element at at least two positions.

Hence, in embodiments the tubular reactor encloses the reactor support element, and at two or more positions the tubular reactor and the reactor support element are in (physical) contact with each other. In further embodiments, the support element encloses the tubular reactor and at two or more positions the tubular reactor and the reactor support element are in physical contact with each other. Moreover, between two adjacent positions of the two or more positions, the tubular reactor and the reactor support element are especially not in physical contact with each other.

In other embodiments (especially comprising a straight tubular arrangement, see below), the tube may contact the support element substantially over the entire length of the tube with (only) a fraction of the reactor wall, wherein the remainder of the reactor wall facing the support element does not (physically) contact the support element (and is arranged extending from the support element). The term "part" in the phrase "part of the tubular reactor is configured in (physical) contact with the reactor support element" may therefore in embodiment also refer to that (latter described) fraction. Ranges of this latter described fraction may correspond to the ones described above. In embodiments, no more than 25%, such as no more than 10%, such as between 0.5-10% of a total surface of the reactor wall contacts the support element.

The support element may partly be configured in a retracted configuration with respect to (or "retracted from") the tube (or tubular reactor), especially wherein other parts of the support element may contact the tube (or tubular reactor). As such, the tube and the support element may define an opening between the support element and the tube (at locations where the support element is retracted). Moreover, the (part of the) tubular reactor and the support element may define one or more open spaces, especially one or more channels (between the support element and the tubular reactor), especially in a direction parallel to the (tubular) arrangement axis. The fluid transport channel may be configured for transporting a (temperature control, especially cooling) fluid through the fluid transport channel. The one or more channels may comprise (or be named) (temperature control or cooling) fluid transport channels.

Hence, in embodiments (the part of) the tubular reactor and the reactor support element define (one or more of) the one or more (cooling) fluid transport channels. The one or more fluid transport channels may thus be defined by the part of the tubular reactor not contacting the support element. The one or more fluid transport channels may especially be defined by a part of the reactor wall (not contacting the support element) and the reactor support element. The one or more fluid transport channels may further be defined by (a part of) the support element (such as the support body) (not contacting the tubular arrangement), especially by a wall or a face of the support element (or support body). Hence, especially the part of the tubular reactor not contacting the support element and (the part of) the support element (not contacting the tubular reactor) may define (one or more of) the one or more fluid transport channels. Herein this may also be referred to as "the support element and the tubular reactor define one or more fluid transport channels". Likewise, when it is described that "the reactor wall and the support element (or a face of the support element) define a fluid transport channel" or that two other elements define the fluid transport channel, this may especially relate to parts of the two elements defining the fluid transport channel. Moreover, the term "the one or more fluid transport channels" may especially relate to a plurality of (different) (the) one or more fluid transport channels. For instance a first subset of the one or more fluid transport channels is defined by the support element and the tubular reactor (as described above), and a second subset of the one or more fluid transport channels is defined between the light sources and the reactor, and optionally a further subset of the one or more fluid transport channels is defined in a reactor support element (see also below). Moreover, the phrase"(one or more of) the one or more fluid transport channels" may especially refer to (a subset of) the one or more fluid transport channels. The term "subset" may consist of one element, such as one fluid transport channel.

Further, in embodiments one support element and the tubular rector may define one or more fluid transport channels. In further embodiments, one support element and a plurality of tubular reactor sections, such as a plurality of tubes or a plurality of tube sections (together defining the tubular reactor) may define one or more fluid transport channels. In yet further embodiments, a plurality of support elements and one tubular reactor (or tube) may define one or more fluid transport channels.

Hence, in embodiments at least part of the reactor wall may define (at least part of) a channel wall of at least one of the one or more fluid transport channels. Thereby, the reactor, especially the reactor wall, may be cooled (or heated) by a temperature control fluid, especially a cooling fluid (or a heating fluid).

In further embodiments, at least part of the reactor wall may be configured within at least one of the one or more fluid transport channels. In particular, the reactor wall may be in fluid contact with at least one of the one or more fluid transport channels. Thereby, the reactor, especially the reactor wall, may be cooled by the cooling fluid. In further embodiments, the fluid transport channel(s) may especially be configured in functional contact with the reactor, *i.e.,* the fluid transport channel(s) may be configured for cooling (or heating) of the reactor. Hence, the fluid transport channel(s) may be configured in thermal contact with the reactor.

The (tube of the) tubular reactor may at a further location of the (tube of) the tubular reactor be in functional contact with the support element. The functional contact may especially provide (or comprise) a thermal contact between the reactor wall and the support element. The functional contact may be part of a conductive path (see below) between (the fluid in) the reactor (wall) and the support element.

The support element may in embodiments comprise the elongated body ("support body"), especially comprising a support element axis (support body) (of elongation). The support element axis may especially be configured parallel to the (tubular) arrangement axis.

The tubular reactor may especially be coiled around the elongated body. The elongated body may in embodiments define a polygonal shape (in a planar projection), especially having rounded corners. In further embodiments, the tube is configured loosely around the corners to avoid deformation and/or breaking of the tube. The support element, especially the support body, may in embodiments define the (coiled) tubular arrangement.

The support element (especially the (cylindrical) (elongated) body) may (further) comprise one or more (reactor support element) recesses providing the retracted configuration with respect to the tube/tubular reactor, as described above. Especially, the recess(es) may be configured parallel to the support element axis, and especially from one end of the support element to another end of the support element. The recess may thus comprise an elongated cavity. The recess may comprise an axis of elongation of the recess. The recess may have any arbitrary (cross sectional) shape (perpendicular to the axis of elongation of the recess) and may e.g. comprise a rectangular shape or a (partly) cylindrical shape. Based on the recess(es), (only) part of tubular reactor may contact the support element, even if a shape of the support element and the tubular reactor arrangement is similar (such as both defining a circle). In specific embodiments, the reactor support element has a cylindrical shape with one or more (elongated) recesses configured parallel to a length axis of the cylindrical shape (especially the support element axis), wherein the one or more recesses and (the part of) the tubular reactor define the fluid transport channel.

The support element (especially the elongated body) may in embodiments comprise one or more support element faces, especially configured facing in a direction of the tubular reactor. The support element may comprise a support element surface comprising the one or more support element faces. In embodiments, the support element comprises a plurality of support element faces. Yet, a cylindrical elongated body may in embodiments comprise only one support element face. The circular elongated body may in other embodiments (also) comprise a plurality of faces. The (one or more) support element faces are especially configured at a side of the support element closest to the tubular reactor. The one or more support element faces may contact the tubular reactor. Each support element face may comprise one or more of the recesses. Each support element face may comprise a plurality of recesses. Hence, the support element face may at least partly be configured retracted (or recessed) relative to the tubular reactor (at a location of the recess(es)). The support element face (or the support element surface) may in embodiments comprise the recess configured retracted (recessed) relative to the tubular reactor.

In specific embodiments, the support element face is configured concavely relative to the tubular reactor. The term "recess" may herein include a concave configuration (wherein the support element face is configured concavely relative to the tubular reactor). The term "recess" may especially relate to a plurality of (different) recesses. The term "support element face" may (also) relate to a plurality of (different) support element faces.

Hence, in further embodiments, the reactor support element comprises a plurality of support element faces, wherein the support element faces are configured concavely relative to the tubular reactor, especially wherein the plurality of support element faces and (the part of) the tubular reactor define (one or more of) the one or more fluid transport channels.

In further embodiments, a shape of the tubular reactor and a shape of the support element are not similar, thereby providing (one or more of) the one or more fluid transport channels. In embodiments, e.g. the reactor support element has a polygonal shape and the tubular arrangement has a circular shape, wherein the reactor support element and (the part of) the tubular reactor define (one or more of) the one or more fluid transport channel. In further specific embodiments, the reactor support element defines a polygon, and the tubular reactor encloses at least part of the reactor support element.

The reactor support element may in further embodiments comprise a thermally conductive element, such as a thermally conductive coating. The thermally conductive element is especially (directly or indirectly via a conductive path) configured in thermal contact with the tubular reactor. In further embodiments at least part of the reactor support element is made of a thermally conductive material. In specific embodiments, substantially the entire support element is made of (thermally conductive) metal. The metal may e.g. be aluminum (or :aluminium"). Aluminum may e.g. be easily be processed by e.g. by die-casting or die pressing to provide the support element. In further embodiments, the metal may be a further metal described herein in relation to conductive materials. During a production of the support element, recesses and/or concave faces may be configured in the support element. Furthermore, the support element may comprise or be made of any further conductive material described herein. In further embodiments, the reactor support element comprises a support body. In embodiments, the reactor support body, at least partly, comprises (or is made of) thermally conductive material. In embodiments, at least part of the reactor support body is produced from a metal, especially from aluminum. Yet in further embodiments, at least a part of the reactor support body is produced from a thermally conductive ceramic material, such as described herein.

The reactor support element, especially the support body, may in embodiments be substantially solid and may for instance comprise (or function as) a heat sink. The heat sink being an embodiment of the thermally conductive element. Additionally, or alternatively, the reactor support element, especially the support body, may be a (hollow) body comprising one or more (further) (cooling) fluid transport channels. The one or more (cooling) fluid transport channels (in the support element) are in embodiments configured parallel to the support element axis. The one or more fluid transport channels (in the support element) may in embodiments extend from a first end of the support element to an opposite end of the support element (along the support element axis). Such fluid transport channel may provide an open fluid connection from a first end of the support body or element to another end of the support body/element. In further embodiments, extremes of the one or more fluid transport channels may be configured at the same end or side of the support body/element. Additionally or alternatively, the support element, especially the support body, may comprise a (cooling) (fluid) cavity e.g. for hosting a temperature control fluid, especially a cooling fluid. Hence, in embodiments, the support element comprises one or more fluid transport channels in the support element, and the support element defines (together with the tubular reactor) one or more fluid transport channels outside of the support element (in fluid connection with the support element).

The term "(cooling) fluid transport channel" especially relates to a channel/path configured in the reactor assembly which may hold a temperature control (or cooling) fluid, especially through which a fluid may flow (such as by a forced transport or spontaneously). The term "(cooling) fluid transport channel" may in embodiments refer to a plurality of (different) (cooling) fluid channels. The (cooling) fluid may be a gaseous cooling fluid, such as air. The (cooling) fluid may also be a (cooling) liquid. The cooling fluid may be further be known as "a coolant". The cooling fluid may be water. The cooling fluid transport channel is especially configured in functional contact (especially in thermal contact) with the reactor, especially with the fluid. The cooling fluid may be configured for cooling the (reactor) fluid, especially the reactor. Especially, the cooling fluid is in fluid contact with the support element. Herein also the term "(cooling) fluid channel" may be used referring to the (cooling) fluid transport channel. Moreover the term "cooling" in "(cooling) fluid channel" and "(cooling) fluid transport channel" may especially relate to temperature controlling. Hence, terms the term "cooling" and temperature control(ling) may in embodiments be used interchangeably herein, both relating to controlling a temperature (including cooling and heating). Temperature controlling is in embodiments of the invention especially explained based on reducing the temperature, and as such temperature controlling is mostly described as cooling. Yet, in alternative embodiments temperature controlling may comprise increasing a temperature. Hence, it will be understood that if the element is explained in relation to cooling, the element may in alternative embodiments be used for heating. As such in embodiments the term "cooling" may be exchanged with the term "heating" (or "temperature control(ling)").

The support element may (thus) be configured for transferring the heat from the tube (the reactor) to the support element. In embodiments the heat may be dissipated in the support element, especially in the thermally conductive element comprised by the support element. Additionally or alternatively, the heat may be transferred to a cooling fluid configured in thermal contact with the support element, especially with the thermally conductive element (of the support element). In embodiments the thermally conductive element is configured for receiving the cooling fluid.

The terms "reactor support element" and "support body" may relate to a plurality of (different) reactor support elements and a plurality of (different) support bodies, respectively. The term support body may further relate to a plurality of (different) support elements together defining the support body. For instance, a plurality of support pillars may define the support body. In specific further embodiments, the support element, especially the support body has a rotational symmetry. The support body /support element may, e.g., comprise a cylindrical shape or a polygonal shape (or cross section). The reactor support element may comprise a cylindrical support body. Such cylinder may allow easy winding of the tube around the support element or inside and against the support element.

The term "thermally conductive element" may relate to any element that may conduct heat. The thermally conductive element especially comprises or is made of thermally conductive material. The thermally conductive material may e.g. have a thermal conductivity of at least 10 W/mK, such as at least 50 W/mK, especially at least 100 W/mK. The thermally conductive material may comprise a metal, such as copper, aluminum, steel, iron, silver, lead, or an alloy of one or more (of these) metals. The thermally conductive material may in further embodiments comprise a ceramic material. The thermally conductive element may e.g. comprise a (thermally conductive) ceramic material, e.g. selected from the group of aluminum nitride (AlN), alumina Al₂O₃, silicon carbide (SiC), silicon nitride (Si₃N₄), magnesium oxide (MgO), boron nitride (BN) and beryllium oxide (BeO). The thermally conductive element may in embodiments comprise a layer or a coating arranged configured at, or being part of, the element comprising the respective thermally conductive element. In further embodiments, the element comprising the thermally conductive element may be configured thermally conductive, and especially may at least partly be made of the thermally conductive material.

Especially, the term "thermal contact" indicates that an element can exchange thermal energy through the process of heat transfer with another element. Especially, herein embodiments are described wherein an element may have thermal contact with a fluid in a duct. In embodiments, thermal contact can be achieved by physical contact. In embodiments, thermal contact may be achieved via a thermally conductive material, such as a thermally conductive glue (or thermally conductive adhesive). Thermal contact may also be achieved between two elements when the two elements are arranged relative to each other at a distance of equal to or less than about 10 µm, though larger distances, such as up to 100 µm may be possible. The shorter the distance, the better the thermal contact. Especially, the distance is 10 µm or less, such as 5 µm or less. The distance may be the distance between two respective surfaces of the respective elements. The distance may be an average distance. For instance, the two elements may be in physical contact at one or more, such as a plurality of positions, but at one or more, especially a plurality of other positions, the elements are not in physical contact. For instance, this may be the case when one or both elements have a rough surface. Hence, in embodiments an average distance between the two elements may be 10 µm or less (though larger average distances may be possible, such as up to 100 µm). In embodiments, the two surfaces of the two elements may be kept at a distance with one or more distance holders.

Herein, the term "thermal contact" may especially refer to an arrangement of elements that may provide a thermal conductivity of at least about 10 W/m/K, such as at least 20 W/m/K, such as at least 50 W/m/K. In embodiments, the term "thermal contact" may especially refer to an arrangement of elements that may provide a thermal conductivity of at least about 150 W/m/K, such as at least 170 W/m/K, especially at least 200 W/m/K. In embodiments, the term "thermal contact" may especially refer to an arrangement of elements that may provide a thermal conductivity of at least about 250 W/m/K, such as at least 300 W/m/K, especially at least 400 W/m/K. For instance, a metal support for a light source, wherein the metal support is in physical contact with the light source and in physical contact with a channel wall of a fluid transport channel, wherein the light source is not in the fluid transport channel, may provide a thermal conductivity between the light source and the fluid transport channel of at least about 10 W/m/K. Suitable thermally conductive materials, that may be used to provide the thermal contact, may be selected from the group (of thermally conductive materials) consist of copper, aluminum, silver, gold, silicon carbide, aluminum nitride, boron nitride, aluminum silicon carbide, beryllium oxide, a silicon carbide composite, aluminum silicon carbide, an copper tungsten alloy, a copper molybdenum carbide, carbon, diamond, and graphite. Alternatively, or additionally, the thermally conductive material may comprise or consist of a ceramic material, such aluminum oxide of a garnet of the YAG-type family, such as YAG. Especially, the thermally conductive material may comprise e.g. copper or aluminum.

In further embodiments, the thermal contact may be provided by an arrangement comprising several types of materials, for instance in a stacked configuration. For example, in embodiments, the arrangement may comprise a stack of functional layers containing both thermal and optical layers. The optical layers may, for example, comprise one or more of BN, Alumina, Di-Chroic layers, reflective polymers, and TiO₂ (in a matrix) and (micro porous) polytetrafluoroethylene (PTFE).

A heat transfer rate from the fluid, especially from the reactor, to the support element especially depends on an overall thermal resistance in a thermal conductive path from the fluid (at the upstream end of the conductive path) to the support element (further downstream of the conductive path) and on a temperature difference between the fluid, especially the reactor, and the support element. The overall heat resistance may be a result of the thermal resistance of successive elements in such conductive path. The heat transfer rate may further be affected by a (2-dimensional) size or dimension of the conductive path. Such size or dimension e.g. relates to a cross section of the conductive path (perpendicular to a direction of the heat flow). In embodiments, the reactor assembly may be configured for an optimized, especially maximized, thermal transfer rate along successive elements of the conductive path. Options to optimize the thermal transfer may e.g. comprise increasing a thermal conductivity of the respective elements along the thermal conductive path, minimizing a length (in the direction of the heat flow) of the conductive path in the respective element, increasing a cross section (perpendicular to the direction of the heat flow) of the respective elements, and increasing a (thermal) contact area between the respective elements along the conductive path.

Hence, herein the elements along the conductive path may especially be selected for a high conductivity. The elements may comprise a thermally conductive element described herein. Further, for elements having a relatively low thermal conductivity, such as below 10 W/mK, especially a thickness (perpendicular to the direction of heat transfer) may be minimized, and a contact area between successive elements may be maximized.

Herein, for instance a conductive path may be configured from the fluid in the reactor to a cooling fluid in the support element. Such path includes the fluid, the reactor wall, the support element and the cooling fluid. To reduce the overall heat resistance in the conductive path, the reactor wall and especially he support element may be selected to comprise thermally conductive elements along the conductive path (especially in contact with each other), a width of the reactor wall may be selected small, such as in the ranges described herein, and e.g. the contact area between the support element and the reactor wall may be maximized.

In further embodiments, the element comprising the thermally conductive element may function as a heat sink or heat spreader. In yet further embodiments, the thermally conductive element comprises a (dedicated) heatsink, e.g., comprising fins or other elements to increase a contact area between the heatsink and a cooling medium. The thermally conductive element may facilitate a transport of heat generated in the reactor assembly from relatively warmer to relatively cooler locations, and especially to a location external from the reactor assembly.

The term "thermally conductive element" may relate to a plurality of (different) thermally conductive elements. Different thermally conductive elements may be comprised by one element (such as the support element). Additionally or alternatively a plurality of elements (e.g. both the support element and the tubular reactor) may comprise (different) conductive elements. The thermally conductive element may e.g. comprise a heatsink and/or a cooling fluid transport channel. The term "thermally conductive element" in relation to an object comprising the thermally conductive element may further indicate that the object is (at least partly) thermally conductive and may e.g. (at least partly) be made of a thermally conductive material. For instance, in embodiments the reactor support element is made of a thermally conductive material, such as a metal. Yet, such thermally conductive element may also comprise further thermally conductive element, such as a heat sink or a cooling transport channel.

Optimizing the thermal contact between the support element and the reactor (fluid) especially relates to maximizing/increasing a (thermal) contact area between the support element and the reactor (or fluid). The terms "transport" and "transfer" in relation to heat may be used interchangeably, herein.

Especially, a support element surface of the support element, especially the support element face, is configured in contact with (part of) the tubular reactor.

In further embodiments, the reactor support element comprises one or more reflective elements. The support element face may comprise the reflective element. The reflective element may reflect light source radiation radiated (emitted) to the support element (face) back to the tube (the tubular reactor). The reflective element may e.g. comprise a reflective coating. The reflective element may comprise a reflective material. In embodiments the support element, especially the support element face, comprises or is made of a reflective material.

Hence, in further embodiments, the reactor support element comprises a reflective element at a side of the reactor support element closest to the reactor, wherein the reflective element is reflective for light source radiation.

The term "reflective element" especially relates to an element being able to reflect the light source radiation. Especially at least 50% of the light source radiation may be reflected when provided to the reflective element. The reflective element may e.g. comprise a (reflective) coating, or a reflective surface. In embodiments, the object comprising the reflective element may (at least partly) be made of reflective material. For instance, the object may be made of a reflective metal, or another (non-metal type) material that may reflect the light source radiation. In specific embodiments, one or more of the thermally conductive elements is made of thermally conductive material that also is reflective for the light source radiation.

The reflective element may further also comprise an optical layer. At least part of the reflective element may further e.g. comprise one or more of boron nitride (BN), alumina (Al₂O₃), aluminum, di-chroic layers, a reflective polymer, and titanium dioxide (TiO₂). The optical layer may comprise a silver comprising layer (or "silver reflector"), or a dichroic layer. The layer may comprise (micro porous) polytetrafluoroethylene (PTFE). In embodiments, the reflective element comprises one or more of aluminum, boron nitride, alumina, silver, a di-chroic layer, and (micro porous) PTFE.

As described above, the tube may comprise a (inner) circular cross section. Yet, the tube may in further embodiments comprise a rectangular cross section or, for instance, a hexagonal cross section and/or a polygonal cross section. The tube may in further embodiments comprise a cylindrical shape comprising a ring-shaped cross section (annulus). The tube may in embodiments comprise a double walled tube, especially comprising a first (tube/reactor) wall and second (tube/reactor) wall (such as an inner wall and an outer wall), wherein the first wall and the second wall (together) enclose the reactor volume. The first wall (or the second wall) may especially be configured (partly) in functional (thermal) contact with the support element. Moreover, in specific embodiments, (at least part of) the first (or the second) reactor wall (in combination with the support element) may define one or more fluid transport channels. During operations, a (reactor) fluid may flow between the first and the second wall. The first and second wall may especially be configured similar and coaxially with respect to each other. As such, the annulus (in combination with a length of the tube and optionally a total number of tubes) may define the reactor volume. The tube may thus comprise a double walled tube. In embodiments, the first wall and the second wall may define a polygon.

In specific further embodiments, for instance comprising the double walled tube, the tube may be configured to define one or more of a polygon or a circle (or an ellipse) described above.

The tube may in specific embodiments comprise a plurality of (rectangular) panels, wall elements, or wall sections defining the wall. For instance, in an embodiment the first wall comprises four panels, wall elements, or wall sections (defining the first reactor wall) and the second wall comprises four panels/wall elements/wall sections. These wall elements/panels/sections may be arranged to provide a double walled rectangular (square) tube especially having a rectangular (square) annulus between the inner and the outer wall. Together, these (eight) wall elements/panels/sections may therefore define the tube, wherein the tubular arrangement defines a rectangle (square) (as an embodiment of a polygon). It will be understood that tubes having other (polygonal) shapes (especially in combination with (polygon shaped) reactor support element) may be configured likewise. In further embodiments, both the reactor support element and the tube are cylindrically shaped.

In further embodiments, the tube may comprise a plurality of tube sections together defining the tube, or the tubular reactor may comprise a plurality of tubular reactor section, together defining the tubular reactor. In embodiments, e.g., a first subset of the plurality of panels as described above may define a first part of the annulus and one or more further subsets of the panels may define a further part of the annulus. One or more of the panels (together) may form a tube section and/or a tubular reactor section. As such, (at least part of) of the subsets (or tubular reactor sections) and the reactor support element may (together) define one or more of the one or more fluid transport channels.

Embodiments of a tubular reactor comprising a first (reactor) wall and a second (reactor) wall are especially configured in a straight tubular arrangement.

In further embodiments, a plurality of (parallel arranged) tubes together define the tubular reactor. In such configuration, the tubular arrangement may (also) especially comprise a straight tubular arrangement. In the latter embodiments (with the plurality of especially parallel arranged tubes), as well as in embodiments wherein the first and the second tube wall define the tubular reactor, the tubular arrangement axis may especially be configured parallel to the tube axis (of the tube or the plurality of tubes).

In further embodiments, the tube comprises a single wall enclosing the reactor volume. The latter may herein also be referred to as a single walled tube.

Especially, the tube wall encloses a tube space. In embodiments, the outer side of the tube wall may be configured in contact with the reactor support. The tube wall may especially define the reactor wall. The reactor wall may define a reactor volume.

The term "reactor" especially relates to a (photo)chemical reactor. The term essentially relates to an enclosed (reactor) volume in which a (photochemical) reaction may take place. The reactor comprises a reactor wall especially enclosing the (enclosed) (reactor) volume. The reactor especially comprises a tubular reactor. The tubular reactor may comprise one or more tubes or pipes. The tube may comprise many different types of shapes and dimensions.

The term "(reactor) wall" may relate to a plurality of (different) reactor walls. The term may e.g. refer to the first (inner) reactor wall and the second (outer) reactor wall described above. The term may further refer to tube walls of a plurality of tubes (together defining the tubular reactor).

The term "similar" in relations to shapes of an element especially means geometrically similar, i.e. one of the shapes may be identical to the other shape after a resize, flip, slide or turn. Similar shapes may be conformal.

The term "annulus" may relate to a circular annulus as well as to a polygonal, such as a square, annulus (or any other geometry of a cross sectional area defined between the first (inner) and the second (outer) reactor wall).

The term "a tube" especially refers to "a pipe", "a channel", "an elongated (open) vessel", "tubing", "piping", etc. that may hold the fluid, and especially in which the fluid may be transported. Hence, also terms like "tubing", "pipe", "piping", "channel", etc. may be used to refer to the tube. Further, the term "tube" may in embodiments refer to a plurality of tubes.

The tube may especially be elongated. The length of the tube may especially be larger than an (inner) width of the tube. A ratio of the length of the tube to the (inner) width of the tube may in embodiments be larger than 5, especially larger than 10. The tube may comprise an (elongated) tube axis.

The tube is (at least partly) transmissive for the light source radiation and especially the radiation provided to the tube may pass the tube wall unhampered. In embodiments, the tube is made of glass. The tube may e.g. be made of quartz, borosilicate glass, soda-lime(-silica), high-silica high temperature glass, aluminosilicate glass, or soda-barium soft glass (or sodium barium glass) (PH160 glass). The glass may, e.g., be marketed as Vycor, Corex, or Pyrex. The tube is in embodiments (at least partly) made of amorphous silica, for instance known as fused silica, fused quartz, quartz glass, or quartz. The tube may in further embodiments at least partly be made of a (transmissive) polymer. Suitable polymers are e.g. poly(methyl methacrylate) (PMMA), silicone/polysiloxane, polydimethylsiloxane (PDMS), perfluoroalkoxy alkanes (PFA), and fluorinated ethylene propylene (FEP). The tube may further comprise a transmissive ceramic material. Examples of transmissive ceramics are e.g. alumina Al₂O₃, yttria alumina garnet (YAG), and spinel, such as magnesium aluminate spinel (MgAl₂O₄) and aluminum oxynitride spinel (Al₂₃O₂₇N₅). In embodiment, e.g. the tube is (at least partly) made of one of these ceramics. In yet further embodiments, the tube may comprise (be made of) transmissive materials such as BaF₂, CaF₂ and MgF₂. The material of the tube may further be selected based on the fluid to be treated. The material may especially be selected for being inert for the (compounds in) the fluid.

Preferably, the radiation provided to the tube may penetrate substantially all fluid in the tube and the tube may especially have an inner characteristic size, such as a diameter or an inner width or height smaller than 10 mm, especially smaller than 8 mm, such as smaller than 5 mm. The characteristic size may in embodiments be at least 0.1 mm, such as 0.2 mm, especially at least 0.5 mm. Hence, in embodiments, the tube comprises an inner cross-sectional area selected from the range of 0.01-80 mm², especially from the range of 0.45-2 mm². In embodiments, the term "width" (of the tube) may relate to a characteristic (inner) distance (or size) between two opposite sides of the wall of the tube. The term "width "may in embodiments relate to the effective (or flow-through) width of the tube (for hosting the fluid), especially the width of the tubular reactor defined by the tube wall or the reactor wall(s). In embodiments, the term "width" (of the tube) may relate to a characteristic (inner) distance (or size) between two opposite sides of the wall of the tube / a width of the annulus (for a double walled tube). Yet, in further embodiments, the term may relate to an (inner) width or an (inner) height of the tube (especially a (longest) distance between two opposite positions at the wall of the tube, especially along a line perpendicular to the tube axis). The term may e.g. refer to an inner diameter of the tube (for a circular cross sections).

The tube may in further embodiments be configured for providing a low thermal resistance between the fluid and external of the tube. The tube may in embodiments comprise (or is made of) a thermally conductive material, such one or more of the thermally conductive materials described herein. In further embodiments a width of the tube wall is minimized. In embodiments, e.g., the width of the tube wall is less than 1 mm., such as less than 0.7 mm, e.g. in the range of 0.1-0.7 mm. Especially a ratio of the width of the tube wall to the inner characteristic size of the tube is selected in the range from 0.05-0.25.

Further, the tube especially comprises an inlet opening and an outlet opening, arranged at extremes of the tube (and defining the length of the tube). A fluid flow provided at the inlet opening may especially exit the tube at the outlet opening. During operations a fluid may flow from the inlet opening to the outlet opening in "a flow direction" or " a direction of flow". The tube axis is especially (locally) configured parallel to the flow direction. Further, the tube especially does not comprise fluid flow restrictions in the tube. The tube is in embodiments configured for allowing a constant fluid velocity along the length of the tube. The tube may in embodiments comprise a (substantially) constant inner cross sectional area (or flow through cross sectional area).

In specific embodiments, the tubular reactor comprises a plurality of tubes. Hence, the tubular arrangement may in embodiments comprise a plurality of tubes. In embodiments, a tubular arrangement axis is especially configured parallel to the tube axis (such as of one or of the plurality of tubes). In further embodiments, the tubular arrangement may especially have a rotational symmetry (especially around the tubular arrangement axis). The tubular arrangement may in embodiments define a circle or e.g. an ellipse. In further embodiments, the tubular arrangement may define a polygon.

In further embodiments, (especially comprising a plurality of tubes) the tubes may be arranged transverse with respect to the tubular arrangement axis. The tubes may partly curve around the tubular arrangement axis. Especially, (overall) a component of the tube axis (that is) arranged parallel to the tubular arrangement axis is larger than a component of the tube axis (that is) arranged perpendicular to the tubular arrangement. Also such arrangement may be comprised by the straight tubular arrangement (in contrast to a coiled tubular arrangement).

Hence, in embodiments, the tubular arrangement axis may be arranged parallel to the tube axis. The tubular arrangement may be configured in a straight tubular arrangement. In embodiments, the tubular arrangement comprises a straight tubular arrangement, especially wherein a first component of the tube axis (that is) configured parallel to the tubular arrangement axis is larger than a second component of the tube axis (that is) configured perpendicular to the tubular arrangement.

In further embodiments, the tube may be bent, curved, or e.g. folded. Moreover, a direction of the (elongated) tube axis may change along a length of the tube. The flow direction along the tube may change correspondingly. The tube may e.g. be coiled. Such bends, curves, or folds may especially be configured to (locally) (substantially) not obstruct a possible fluid flow through the tube.

The tubular reactor may be spiraled. The tube may have a shape like a corkscrew. In further embodiments, the shape of the tubular reactor corresponds to a circular helix (having a constant radius with respect to the tubular arrangement axis). The tube may especially be coiled. The coiled tube may comprise a single turn or winding. The coil may in embodiments comprise less than a single turn. Yet, the coiled tube especially comprises a plurality of turns, windings.

The tube may e.g. comprise at least 10 windings or turns, especially at least 20 windings, such as at least 50 windings. In embodiments, the tube comprises 2-200, especially 5-100, even more especially 10-75 windings or turns. In yet further embodiments the tube may comprise more than 200 windings, such as up to 500, or even up to 1000, or even more. The windings or turns are especially (all) configured aligned with each other. As such, the coil or spiral may comprise a monolayer of windings or turns (especially with respect to the tubular arrangement axis). The windings or turns may in further embodiments define a face of the (coiled) tubular reactor (or the tubular arrangement. In further embodiments the windings or turns may define two opposite faces of the tubular reactor. The faces are especially configured in a radiation receiving relationship with the light sources. One or more of the faces of the tubular reactor may further be in functional (thermal) contact with one or more of the fluid transport channels.

It will be understood that intermediate configurations between substantially straight tubes and coiled tubes are also part of this invention. In embodiments, e.g., the tubular reactor comprises a (plurality of) coiled tube(s) comprising less than one turn, such as half of a turn or only a quarter of a turn. Such configurations may be comprised by the coiled tubular arrangement and/or the straight tubular arrangement.

In further specific embodiments, a distance between successive windings or turns of the spiral (coil) may be minimized. In embodiments, successive windings (turns) of the coil may be arranged contacting each other substantially along a complete winding (turn). The pitch of the spiral or coil may in embodiments substantially equal a characteristic outer size of the tube. In further embodiments, the pitch may be equal to or less than 10 times the outer size of the tube, such as equal to or less than 5 times the outer size of the tube. The pitch may in embodiment e.g. be substantially 2 times the characteristic outer size (especially leaving space for a further, especially parallel arranged, tube).

Yet, the pitch may in embodiments be larger than 10, such as 50 or 100 times the characteristic outer size. The term "pitch" is known to the person skilled in the art and especially refers to a shortest distance between centers (tube axes) of two adjacent windings or turns.

The term "characteristic outer size" especially relates to a largest distance from a first location of the tube (reactor) wall to a second location of the tube (reactor) along a line perpendicular to the tube axis. For a circular tube, the outer size equals the outer diameter. For a square or rectangular tube, the outer size may refer to the outer height or outer width of the tube.

Hence, in embodiments, the tubular arrangement comprises a coiled tubular arrangement, especially wherein the tubular reactor is helically coiled.

In further embodiments, the tubular arrangement comprises a straight tubular arrangement, especially wherein the tubular reactor comprises a plurality of straight tubes or wherein the tubular reactor comprises a double walled tubular reactor. In embodiments, the thermally conductive element comprises the reflective element.

The reactor assembly may be used for treating a fluid. As a result, (photosensitive) reactants in the fluid may react (see also below). Moreover, the term "treating the fluid with light source radiation" may in embodiments relate to executing a (photochemical) reaction on (reactants in) the fluid.

Herein also the term "irradiating the fluid" such as in the phrase "irradiating the fluid, with the light source radiation" is used. The term may especially relate to providing light source radiation to the fluid. Hence, herein the terms "providing light source radiation (to the fluid)" and the like and "irradiating (the fluid with) light source radiation" may especially be used interchangeably. Moreover, herein the terms "light" and "radiation" may be used interchangeably, especially in relation to the light source radiation.

In specific embodiments, the reactor assembly (further) comprises the (plurality of) light sources configured to generate the light source radiation. The plurality of light sources may be configured for irradiating (emitting) one or more of UV radiation, visible radiation, and IR radiation. The reactor assembly may especially comprise a light source arrangement comprising the plurality of light sources. The plurality of light sources may be configured in the light source arrangement. The reactor assembly may in embodiments (thus) comprise a photoreactor assembly.

The term " UV radiation" is known to the person skilled in the art and relates to "ultraviolet radiation", or "ultraviolet emission", or "ultraviolet light", especially having one or more wavelengths in the range of about 10-400 nm, or 10-380 nm. In embodiments, UV radiation may especially have one or more wavelength in the range of about 100-400 nm, or 100-380 nm. Moreover, the term "UV radiation" and similar terms may also refer to one or more of UVA, UVB, and UVC radiation. UVA radiation may especially refer to having one or more wavelength in the range of about 315-400 nm. UVB radiation may especially refer to having one or more wavelength in the range of about 280-315 nm. UVC radiation may further especially have one or more wavelength in the range of about 100-280 nm.

The terms "visible", "visible light", "visible emission", or "visible radiation" and similar terms refer to light having one or more wavelengths in the range of about 380-780 nm.

The term "IR radiation" especially relates to "infrared radiation", " infrared emission", or "infrared light", especially having one or more wavelengths in the range of 780 nm to 1 mm. Moreover, the term "IR radiation" and similar terms may also refer to one or more of NIR, SWIR, MWIR, LWIR, FIR radiation. NIR may especially relate to Near-Infrared radiation having one or more wavelength in the range of about 750-1400 nm. SWIR may especially relate to Short-wavelength infrared having one or more wavelength in the range of about 1400-3000 nm. MWIR may especially relate to Mid-wavelength infrared having one or more wavelength in the range of about 3000-8000 nm. LWIR may especially relate to Long-wavelength infrared having one or more wavelength in the range of about 8-15 µm. FIR may especially relate to Far infrared having one or more wavelength in the range of about 15-1000 µm.

In embodiments (at least part of) the plurality of light sources comprise Light emitting diodes (LEDs), especially an array of Light emitting diodes. The term "array" may especially refer to a plurality of (different) arrays. In further embodiments (at least part of) the plurality of light sources comprise Chips-on-Board light sources (COB). The term "COB" especially refers to LED chips in the form of a semiconductor chip that is neither encased nor connected but directly mounted onto a substrate, such as a Printed Circuit Board. The COB and/or LED may in embodiments comprise a direct LED (with dominant wavelengths ranging for instance from UVC to IR wavelengths) In further embodiments, the COB and/or LED comprises one or more phosphor-converted LEDs. Using such light sources, high intensity radiations (light) may be provided per light source or per light source (support) element (see below). In embodiments, e.g., the light sources may provide 100-25,000 lumen (visible light) per light source. In embodiments, the light sources may e.g. apply (consume) 0.5-500 (electrical) Watts per light source (input power).

In embodiments, the plurality of light sources may comprise (single) chips-on-board light sources (COB) and/or (single) light emitting diodes (LEDs), and/or (single) laser diodes. In further embodiments, the light sources may comprise an array of light emitting diodes (LEDs) and/or laser diode sources. Hence, in embodiments the plurality of light sources may comprise one or more of chips-on-board light sources (COB), light emitting diodes (LEDs), and laser diodes. In further embodiments, the plurality of light sources comprise Chips-on-Board light sources (COB) and/or an array of Light emitting diodes (LEDs).

Hence, in further embodiments, the reactor assembly comprises a photoreactor assembly, wherein the reactor assembly further comprises a light source arrangement comprising a plurality of light sources configured to generate the light source radiation, especially wherein (at least part of) the reactor wall is configured in a radiation receiving relationship with the plurality of light sources. Hence, in embodiments the reactor wall and the light source(s) may be radiationally coupled.

The light source arrangement may be configured to efficiently provide light source radiation to the tubular reactor. The light source arrangement may especially have a light arrangement axis, configured parallel to the tubular arrangement axis. The light source arrangement may be configured corresponding to the tubular arrangement. In embodiments, e.g., the tubular arrangement comprises a cylindrical arrangement and the light source arrangement comprises a cylindrical arrangement. The light source arrangement may especially comprise a radial light source arrangement, especially wherein the light sources are arranged along a circle (in a planar projection). In embodiments, the light sources may simultaneously be arranged along a polygon. Hence, in embodiments a polygon may cross at least part of the plurality of light sources, and a circle may (also) cross the at least part of the plurality of light sources. The light sources may in further specific embodiments be arranged along an ellipse.

In embodiments at least part of the light sources is associated to the reactor support element, especially at the support element face. The at least part of the light sources may e.g. be arranged in the one or more recesses of the support element (face). The light sources may especially be arranged between the support element and the tubular reactor. The light sources may be enclosed by the support element surface. At least a subset of the one or more of the plurality of the light sources may define part of (one or more of) the one or more fluid transport channels. Additionally or alternatively, the light sources may be arranged extending from the support element surface. At least a (further) subset of the plurality of light sources may (also) be configured in (one or more of) the one or more of fluid transport channels.

In further embodiments, one or more of the plurality of light sources are associated to the reactor support element, wherein the one or more of the plurality of light sources are configured between the reactor support element and the tubular reactor, and wherein the one or more of the light sources define part of (each of) the one or more fluid transport channels or are at least partly configured within the one or more fluid transport channels.

In further embodiments, the reactor assembly comprises a number of light source elements configured for supporting (at least part of) the light sources. The light source elements may especially be rectangular. The light source element may further be curved or flat. At least part of the light source arrangement may be defined by the number of light source elements. Especially each light source element comprises one or more of the light sources. In specific embodiments, the reactor assembly comprises a number of light source elements; wherein each light source element comprises one or more of the plurality of light sources, especially wherein each of the light source elements comprises at least one thermally conductive element configured in thermal contact with the light source.

The light source elements may be removably configured in the reactor assembly. Such configuration may allow easy assembling of the reactor assembly and may further allow for a quick change of one or more of the light sources (e.g. when another radiation wavelength is desired). The combination of the light source elements, and especially (at least part of) the light source arrangement may therefore in embodiments define a polygon (especially in a planar projection). The light sources may be arranged at the polygon edges, especially at the center of the polygon edges. For instance, in embodiments one of the light sources is arranged at a center of each of the polygon edges. In further embodiments, (also) a respective light source may be arranged at a center of each of the support element faces.

Hence, in embodiments, the (photoreactor) assembly may comprise a plurality of light sources, especially wherein the light sources are arranged according to the light source arrangement. In particular, the light sources may be arranged (according to the light source arrangement) in a regular pattern, such as with constant distances between adjacent light sources. However, in further embodiments, the light sources may also be arranged in an irregular pattern, especially with varying distances. For example, in specific embodiments, a first set of light sources may be separated from one another by a first light source distance, and may be separated by a second set of light sources by a second light source distance, especially wherein the first set of light sources provide different light source radiation, especially a different wavelength of light source radiation, than the second set of light sources.

In further embodiments, the tubular arrangement and the light source arrangement may both define polygons having mutually parallel configured polygon edges. In particular, the tubular arrangement and the light source arrangement may define polygons, especially polygons with the same number of polygon edges, and/or especially wherein the polygons are configured concentric, and/or especially wherein the polygons have parallel oriented polygon edges. In particular, the edges of the polygons spatially arranged in closest proximity may be arranged in parallel.

In embodiments wherein both the light source arrangement and the reactor have a polygon shape, especially with parallel edges, a higher efficiency may be obtained with a larger number of polygon edges, but with reducing returns, *i.e.,* the benefit from going from 4->6 edges may be greater than the benefit from going from 8->10 edges. A polygon having 4-8, even more especially 6 to 8 edges may be especially advantageous in terms of efficiency, manufacturing and operation. In particular, in embodiments, the light source arrangement may define a (first) polygon.

In embodiments, the tubular arrangement defines a circle or an ellipse and at least part of the light sources are arranged at the support element faces, especially wherein the support element also defines a circle or an ellipse respectively. Hence in embodiments, (at least part of) the light source arrangement (also) defines a circle or an ellipse (in a planar projection) respectively. In further embodiments, (also) at least part of the light sources are arranged at light source elements and define a polygon (in a planar view).

In further specific embodiments, (also) the tubular arrangement may define a polygon (especially in a planar view). In further embodiments, one or more of the tubular arrangement and the light source arrangement defines a polygon.

In specific embodiments, the tubular arrangement and the light source arrangement both define polygons having mutually parallel configured polygon edges, especially wherein the polygons each comprise 3-20, especially 4-10, such as 6-8, polygon edges.

In embodiments, a number of edges of the polygon equals (a total) number of light source elements.

The plurality of light sources may be configured enclosing the tubular arrangement (and as such may all face in a direction of the tubular arrangement axis). In further embodiments, the plurality of light sources are enclosed by the tubular arrangement (and may all face away from the tubular arrangement axis). Yet, in further embodiments, a part of the light sources enclose the tubular arrangement and another part is enclosed by the tubular arrangement. Hence, in embodiments at least a first subset of the plurality of light sources enclose the (coiled) tubular arrangement. Additionally, or alternatively at least a second subset of the plurality of light sources are enclosed by the (coiled) tubular arrangement. Hence in embodiments, a first subset of the light sources may radiate in a direction towards the second subset of the light sources (and vice versa).

In embodiments, the light source arrangement may, especially in a planar projection, define a (first) polygon comprising (first) polygon edges. The polygon may especially be a convex polygon. Further, the polygon may especially be a regular polygon. Hence, in embodiments, the polygon may be a convex regular polygon. In embodiments, the light sources may be arranged at the inside of the polygon, especially when the polygon surrounds the reactor. In further embodiments, the light sources may be arranged at the outside of the polygon, especially when the reactor surrounds the polygon. In further embodiments, the light source arrangement may comprise an inner (first) polygon arranged surrounded by the reactor, and an outer (first) polygon arranged surrounding the reactor, wherein light sources are arranged on the outside of the inner polygon (facing the reactor) and at the inside of the outer polygon (facing the reactor).

In further embodiments, the light sources are comprised by a plurality of light source elements and especially the light source elements are configured for moving/guiding heat away from the light sources. The light source element may in embodiments comprise one or more thermally conductive element configured in thermal contact with at least one of the light sources comprised by the light source elements.

Hence, in embodiments, the (photo)reactor assembly comprises a number of light source elements, wherein each light source element comprises one or more of the plurality of light sources, and especially wherein each of the light source elements comprises at least one thermally conductive element configured in thermal contact with the light source(s) (comprised by the light source elements). The thermally conductive element may especially at least partly comprise (or be made of) a thermally conductive material, such as described herein. In further embodiments, the light source element is a thermally conductive element.

The light source element may further comprise a reflective element at a surface of the light source element facing (in a direction of the) the reactor wall. The reflective element is especially reflective for the light source radiation. The reflective element may comprise a (reflective) coating. In further embodiments, the surface of the light source element is reflective. The (surface) of the reflective element may e.g. comprise a metal being reflective for the light source radiation. In embodiments the thermally conductive element comprises the reflective element. In further embodiment, the surface of the thermally conductive element may be reflective.

Additionally, or alternatively the reactor assembly may further comprise a wall enclosing the tubular reactor and especially also the light source elements. Also such wall may comprise a reflective element, such as described in relation to the light source element or the support element. The wall may e.g. comprise a reflective coating and/or a reflective surface facing the tubular reactor, wherein the reflective surface is reflective for the light source radiation.

As described above, many photochemical reactions are known, such as dissociation reactions, isomerization or rearrangement reactions, addition reactions and substitution reactions, and, e.g., redox reactions. In embodiments, the (photochemical) reaction comprises a photocatalytic reaction. Photochemical reactions may especially use the energy of the light source radiation to change a quantum state of a system (an atom or a molecule) (that absorbs the energy) to an excited state. In the excited state, the system may successively further react with itself or other systems (atoms, molecules) and/or may initiate a further reaction. In specific embodiments, a rate of the photochemical reaction may be controlled by an added (photo-)catalysts or photosensitizer. The terms "treating", "treated" and the like, used herein, such as in the phrase "treating a fluid with the light source (light)" may especially thus relate to performing a photochemical reaction on a relevant (especially photosensitive) system (atom or molecule) in the fluid, especially thereby elevating the system (atom, molecule) to a state of higher energy and especially causing the further reaction. In embodiments a photoactive compound may be provided to the fluid prior and/or during the irradiation of the fluid. For instance, a photocatalyst and/or a photosensitizer may be added to start and/or promote/accelerate the photochemical reaction.

Herein, such atom or molecule may further also be named "a (photosensitive) reactant".

When absorbing (light source) radiation (light), energy of a photon may be absorbed. The photon energy may also be indicated as *h*v, wherein *h* is Planck's constant and v is the photon's frequency. Hence, the amount of energy provided to the atom or molecule may be provided in discrete amounts and is especially a function of the frequency of the light (photon). Furthermore, the excitation of an atom or a molecule to a higher state may also require a specific amount of energy, which preferably is matched with the amount of energy provided by the photon. This may also explain that different photochemical reactions may require light having different wavelength. Therefore, in embodiments, the assembly may be configured to control a wavelength of the light source radiation.

In embodiments, the plurality of light sources are configured to provide a determined wavelength (distribution) (during operations). In further embodiments one or more of the light sources may provide (a) mutually different wavelength (distributions). In further embodiments, (also) the intensities of the light source radiation of the light sources may be controlled independently from each other.

In specific embodiments, two or more of the plurality of light sources may provide light source radiation having different spectral power distributions. For instance, a first light source may be configured to generate UV radiation and a second light source may be configured to generate visible radiation. In specific embodiments, the photoreactor assembly may comprise two or more light sources configured at different positions along an (tubular) arrangement axis A1. The arrangement axis may e.g. be a length axis, or an axis of symmetry relative to the reactor. Hence, e.g. at different heights, different types of light sources may be provided. Hence, in embodiments the photoreactor may comprise a plurality of light sources wherein the light sources are configured to emit (radiate) light source radiation with different intensities and/or (with different) wavelength distributions. Each light source may also comprise a plurality of light emitting segments emitting (radiating) light source radiation with different intensities and/or wavelength distributions. The light sources and its segments may be arranged parallel or perpendicular to the tube axis. Such light source configurations may allow for a multi-step photochemical process with different wavelengths and/or intensities in one pass.

The term "wavelength" may relate to a plurality of wavelengths. The term may especially refer to a wavelength distribution.

Photochemical reactions may be carried out in the reactor by irradiating fluid in the reactor with the light source radiation. The wall of the reactor may therefore be configured to be transmissive to the light source radiation. The term "transmissive" in the phrase "transmissive to the light source radiation "especially refers to the property of allowing the light source radiation to pass through (the wall). In embodiments, the reactor wall may be translucent for the light source radiation. Yet, in further embodiments, the reactor wall is transparent for the light source radiation. The term "transmissive" not necessarily implies that 100% of the light source radiation provided emitted to the reactor wall may also pass through the wall. In embodiments at least 50% of the light source radiation emitted to the reactor wall may pass through the reactor wall. A relative amount of light source radiation passing through the reactor wall may e.g. depend on the wavelength of the light source radiation.

The reactor wall is in embodiments configured transmissive for UV radiation. In further embodiments, the reactor wall may for instance (also) be configured transmissive for visible radiation. In yet further embodiments, the reactor wall is configured (also) transmissive for IR radiation.

The reactor wall is especially configured in a radiation receiving relationship with the plurality of light sources. The term "radiation receiving relationship" relates to being configured such that radiation (light) emitted by the light source may directly or indirectly be provided to the reactor wall. The radiation (light) may substantially travel along a straight line, directly from the light source to the wall and/or the radiation (light) may travel from the light source to the wall via (light/radiation) reflecting elements (reflective for the light source radiation). Additionally, or alternatively, the radiation (light) may travel to the wall via scattering, diffusion, etc.

In further specific embodiments (at least part of) the reactor support element, especially the support body, is transmissive for the light source radiation. The reactor support element is specific embodiments configured reflective for the light source radiation.

The reactor assembly especially comprises a temperature control element, especially a cooling element (especially for active and/or passive cooling). The cooling element may comprise (one or more of) the one or more (cooling) fluid transport channel, such as described herein. In further embodiments, the cooling element may (also) comprise the thermally conductive elements. The cooling element may especially be configured for cooling the reactor and/or a light source. Hence, the cooling element is especially configured in thermal contact with the reactor and/or one or more of the plurality of light sources.

The terms "cooling element", "fluid transport channel" and "thermally conductive element" may especially relate to a plurality of cooling elements, fluid transport channels and thermally conductive elements, respectively. The term "cooling element" may refer to a temperature control element (and may be used to heat and cool).

Hence, in further embodiments, the photoreactor assembly comprises one or more cooling elements (or temperature control elements), wherein the one or more cooling elements comprise the one or more fluid transport channels, especially one or more of the fluid transport channels defined by the reactor support element and the tubular reactor. In further embodiments, the one or more cooling elements (temperature control elements) comprise one or more of (i) one or more (cooling/temperature control) fluid transport channels and (ii) one or more thermally conductive elements, wherein the one or more cooling elements (temperature control elements) are in thermal contact with one or more of (a) the reactor and (b) one or more of the light sources, especially at least with the reactor. In embodiments, one or more fluid transport channels are configured in one or more of the thermally conductive elements.

In further embodiments, the tubular reactor and the light source elements define one or more (cooling) fluid transport channels between the tubular reactor and (the faces of) the light source elements. Hence, in further embodiments, one or more of the fluid transport channel may especially (also) be configured in functional contact with one or more of the plurality of light sources, i.e., the fluid transport channel(s) may be configured for cooling one or more of the light sources. Hence, the fluid transport channel(s) may be configured in thermal contact with the light source arrangement, especially with the light source(s). In particular, the fluid transport channel(s) may be configured in fluid contact with the light source. In embodiments, especially a fluid transport channel width may be defined by a minimal distance between the tubular reactor and the light source elements. The fluid transport channel width may typically be less than 4 cm, especially less than 2 cm, such as less than 1 cm, such as equal to or less than 5 mm. The transport channel width may be at least 0.2 mm, such as at least 0.5 mm, especially at least 1 mm, or even at least 2 mm. In embodiments the fluid transport channel width is selected from the range of 0.2-40 mm, such as 0.5-20 mm, especially 0.5-10 mm, or 1-5 mm. The width of a fluid transport channel defined between the reactor support and the tubular reactor may be in the same range. In further embodiments, (see before) the support element (body) may be comprising one or more (cooling) fluid transport channels. In such embodiment, especially the fluid transport channel width may be defined by a (internal) diameter or width of the channel. As such, the fluid transport channel width may in embodiments (also) be in the range of 0.5-10 cm, such as 5-10 cm or, e.g., 0.5-2 cm. Yet, the channel width may in embodiments also be larger than 10 cm.

In embodiments, the thermally conductive element comprises a heat sink, especially comprising one or more fins (or ribs). In embodiments, the reactor support element, especially the reactor support body, comprises fins. In further specific elements, the light source element may comprise a heat sink. The light source may in embodiments be connected to, especially mounted at, the heat sink. The heat sink may have a reflective surface providing the face of the light source element. A thermally conductive element such as the heat sink may be passively cooled. Yet, in embodiments, a cooling fluid may be forced along the thermally conductive element to actively cool it. The cooling fluid may additionally or alternatively be forced through a cooling fluid transport channel configured in the thermally conductive element (to actively cool it). The cooling fluid may further be provided to the cooling cavity (or temperature control cavity) in the support element.

In embodiments, the reactor assembly further comprises an air transporting device or gas transporting device, such as a fan or a blower. The air (gas) transporting device may especially be configured facing a thermally conductive element. In embodiments the air transporting device is configured to transport air along (and/or through) one or more of the thermally conductive elements, such as along (and/or through) one or more of the heat sinks. The air transporting device may further be configured for transporting air through one or more of the cooling fluid transport channels. The term "air transporting device" may especially relate to a plurality of air transporting devices.

Hence, in further embodiments, the reactor assembly further comprises a cooling system configured for transporting a cooling fluid through and/or along one or more of the one or more cooling elements. The cooling system may especially be configured for (at least) transporting a cooling fluid through (one or more of) the one or more fluid transport channels. The cooling system may e.g. comprise the gas (or air) transporting device (wherein the cooling fluid comprises a gas, especially air), such as an air blower or a fan.

Additionally or alternatively, the cooling system may comprise a liquid transport device, such as a pump configured to pump a liquid (wherein the cooling fluid comprises a liquid).

The one or more fluid transport channels may especially at least comprise one or more of the fluid transport channels defined by the reactor support element and the tubular reactor. In embodiments, the liquid transport device is configured for providing a liquid cooling fluid to one or more of the (cooling) fluid transport channels or cooling cavities. In embodiments, the liquid transport device is configured for providing a liquid along one or more of the thermally conductive elements. The reactor assembly may comprise a cooling fluid transporting device. The gas transporting device (air transporting device) and the liquid transporting device are examples of the cooling fluid transporting device.

The "terms air transporting device", "cooling fluid transporting device", "liquid transporting device", etc. may refer to a plurality of (different) respective transporting devices. For instance, the air transporting device may comprise one or more devices selected from the group consisting of an air blower and a fan.

Herein, the term polygon is used, especially in in relation to different arrangements and shapes. A polygon is essentially a two-dimensional figure that is described by a finite number of straight line segments named edges or sides. Herein the term "polygon" may especially refer to a convex polygon. Further, the polygon especially comprises a regular polygon. The polygon may e.g. be a square, a pentagon, a hexagon, a heptagon, an octagon, a nonagon, a decagon, etc., etc.. The polygon may in embodiments comprise an n-gon, especially wherein *n* is at least 3, such as at least 4. In embodiments *n* is equal to or smaller than 50, especially equal to or smaller than 20, such as equal to or smaller than 12, especially equal to or smaller than 10, such as 3≤*n*≤10, especially 4≤*n*≤10 such as 6≤*n*≤10. An *n*-gon comprises *n* edges or sides. Hence, the polygon(s) described herein may also especially comprise a number of edges equal to *n.*

Furthermore, phrases like "one or more of the elements define a polygon" may especially indicate that an outline, perimeter, contour or periphery of a cross section of the element defines the polygon. The outline, perimeter, contour, or periphery not necessary comprises all straight edges. Especially, the polygon that substantially corresponds to the contours may be pictured around the element (defining the polygon). For instance, at least 90% of the area of the polygon may correspond to the respective cross section of the element. Furthermore, in embodiments, the edges of the polygon may be straight, however, the corners of the element may be rounded. Yet, in further embodiments the edges many be slightly curved.

The terms "upstream" and "downstream" relate to an arrangement of items or features relative to the propagation of the light (or the fluid) from a light generating means (here the especially the light source) (or a fluid inlet), wherein relative to a first position within a beam of light from the light generating means (or a flow from the inlet), a second position in the beam of light closer to the light generating means (or a second position in the flow closer to the inlet) is "upstream", and a third position within the beam of light further away from the light generating means (or a third position in the flow further away from the inlet) is "downstream".

The term "light source" may refer to a semiconductor light-emitting device, such as a light emitting diode (LEDs), a resonant cavity light emitting diode (RCLED), a vertical cavity laser diode (VCSELs), an edge emitting laser, etc.. The term "light source" may also refer to an organic light-emitting diode, such as a passive-matrix (PMOLED) or an active-matrix (AMOLED). In a specific embodiment, the light source comprises a solid state light source (such as a LED or laser diode). In an embodiment, the light source comprises a LED (light emitting diode). The term LED may also refer to a plurality of LEDs. Further, the term "light source" may in embodiments also refer to a so-called chips-on-board (COB) light source. The term "COB" especially refers to LED chips in the form of a semiconductor chip that is neither encased nor connected but directly mounted onto a substrate, such as a PCB and/or a heat sink Hence, a plurality of semiconductor light sources may be configured on the same substrate. In embodiments, a COB is a multi LED chip configured together as a single lighting module. The term "light source" may also relate to a plurality of (essentially identical (or different)) light sources, such as 2-2000 solid state light sources. In embodiments, the light source may comprise one or more micro-optical elements (array of micro lenses) downstream of a single solid state light source, such as a LED, or downstream of a plurality of solid state light sources (i.e. e.g. shared by multiple LEDs). In embodiments, the light source may comprise a LED with on-chip optics. In embodiments, the light source comprises a pixelated single LEDs (with or without optics) (offering in embodiments on-chip beam steering). In embodiments, the light source may comprise a laser module.

The phrases "different light sources" or "a plurality of different light sources", and similar phrases, may in embodiments refer to a plurality of solid state light sources selected from at least two different bins. Likewise, the phrases "identical light sources" or "a plurality of same light sources", and similar phrases, may in embodiments refer to a plurality of solid state light sources selected from the same bin.

The reactor assembly may comprise or may be functionally coupled to a control system. The control system may, especially in an operational mode, be configured to control one or more of the light sources. alternatively or additionally, the control system may, especially in an operational mode, be configured to control the cooling system. Alternatively or additionally, the control system may, especially in an operational mode, be configured to control the fluid transporting device. Further, alternatively or additionally the control system may, especially in an operational mode, be configured to control a flow of a fluid through the reactor.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface.

The control system may also be configured to receive and execute instructions form a remote control. In embodiments, the control system may be controlled via an App on a device, such as a portable device, like a Smartphone or I-phone, a tablet, etc.. The device is thus not necessarily coupled to the lighting system, but may be (temporarily) functionally coupled to the lighting system.

The system, or apparatus, or device may execute an action in a "mode" or "operation mode" or "mode of operation". Likewise, in a method an action or stage, or step may be executed in a "mode" or "operation mode" or "mode of operation" or "operational mode". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed.

However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

Hence, in embodiments, the control system may control in dependence of one or more of an input signal of a user interface, a sensor signal (of a sensor), and a timer. The term "timer" may refer to a clock and/or a predetermined time scheme.

In a further aspect, the invention provides a method for treating a (reactor) fluid with light source radiation. The method especially comprises (i) providing the reactor assembly described herein, wherein the reactor assembly comprises the photoreactor assembly, (ii) providing the (reactor) fluid to be treated with the light source radiation in(to) the reactor; (iii) (providing light source radiation to the reactor and) irradiating the fluid with the light source radiation, and especially (iv) transporting a temperature control fluid, especially a cooling fluid, through (one or more of) the one or more (cooling) fluid transport channels.

The method especially comprises transporting the fluid through the reactor while irradiating the fluid with the light source radiation and (while) transporting a temperature control fluid, especially a cooling fluid through (one or more of) the one or more (cooling) fluid transport channels.

In embodiments, the method comprises transporting a cooling fluid through and/or along one or conductive elements comprised by the reactor support element. Especially, the cooling fluid is provided to one or more of the (cooling) fluid transport channel(s) defined by the reactor support element and the tubular reactor. The cooling fluid may further also be provided to one or more of the other cooling fluid transport channels and/or to the cooling cavity in the reactor support element.

Irradiating the fluid with the light source radiation may induce the photochemical reaction. In embodiment, the (photochemical) reaction comprises a photocatalytic reaction. In embodiments, the method further comprises providing a photocatalyst and or photosensitizer to the (reactor) fluid prior to and/or during irradiating the (reactor) fluid with the light source radiation.

In embodiments, the method comprises a batch process. In other embodiments, the method comprises a continuous process. Hence, in specific embodiments, the method comprises transporting the fluid through the reactor while irradiating the fluid with the light source radiation.

The reactor assembly may especially comprise one or more (further) cooling elements (described herein). The method may further comprise transporting the cooling fluid through and/or along one or more (of the other) cooling elements.

In yet further embodiments, the method comprises selecting the light source radiation from one or more of UV radiation, visible radiation, and IR radiation, prior to irradiating the fluid with the light source radiation. The light source radiation may especially be selected by selecting the plurality of light sources to generate the (selected) light source radiation. The light source radiation may further be selected based on the fluid to be treated, especially a (photosensitive) reactant and/or photocatalyst and/or photosensitizer in the fluid.

In further embodiments, one or more of the light sources are controlled to radiate different intensities and/or wavelength distributions.

In yet a further aspect, the invention further provides a method for providing a reactor assembly, especially the reactor assembly described herein, wherein the method comprises: (i) providing a reactor comprising a reactor wall, wherein the reactor wall defines a tubular reactor; (ii) providing a reactor support element comprising a reactor element surface, especially comprising one or more support element faces, comprising one or more recesses; (iii) arranging the tubular reactor in a tubular arrangement; wherein the support element surface, especially the support element face is at least partly configured recessed relative to the tubular reactor, wherein a part of the tubular reactor is configured in contact with the reactor support element and wherein another part of the tubular reactor and the reactor support element define one or more (temperature control, especially cooling) fluid transport channels.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1A-1D schematically depict some general aspects of the reactor assembly and of a coiled tubular reactor arrangement;
Figs. 2A-2G schematically depict some further aspects of the reactor assembly;
Fig. 3 schematically depicts some aspects of the cooling system of the reactor assembly;
Fig. 4 schematically depicts a further embodiment comprising a straight tubular arrangement; and
Figs 5A-C schematically depict further features of embodiments of the photoreactor assembly.

The schematic drawings are not necessarily to scale.

### DETAILED DESCRIPTION OF THE EMBODIMENTS

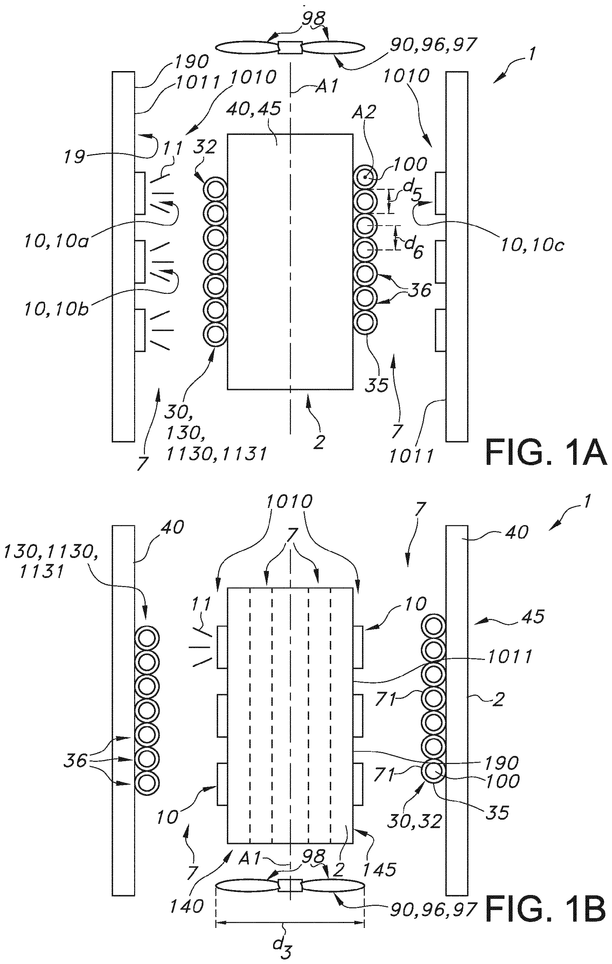

Figs. 1A and 1B schematically depict some general aspects of the reactor assembly 1. The reactor assembly 1 comprises a reactor 30 for hosting a (reactor) fluid 100 to be treated with light source radiation 11. The light source radiation 11 may especially be selected from the group of UV radiation, visible radiation, and IR radiation. The reactor 30 comprises a reactor wall 35 which is at least partly transmissive for the light source radiation 11. The reactor wall 35 may define the reactor 30.

Light source radiation 11 may be provided by a plurality of light sources 10, such as depicted in Figs. 1A and 1B. The light source 10 may be part of the reactor assembly 1. The reactor assembly 1 comprising the light sources 10 may also be referred to as a photoreactor assembly. The light source 10 may especially comprise one or more of Chips-on-Board light sources (COB), Light emitting diodes (LEDs), and laser diodes.

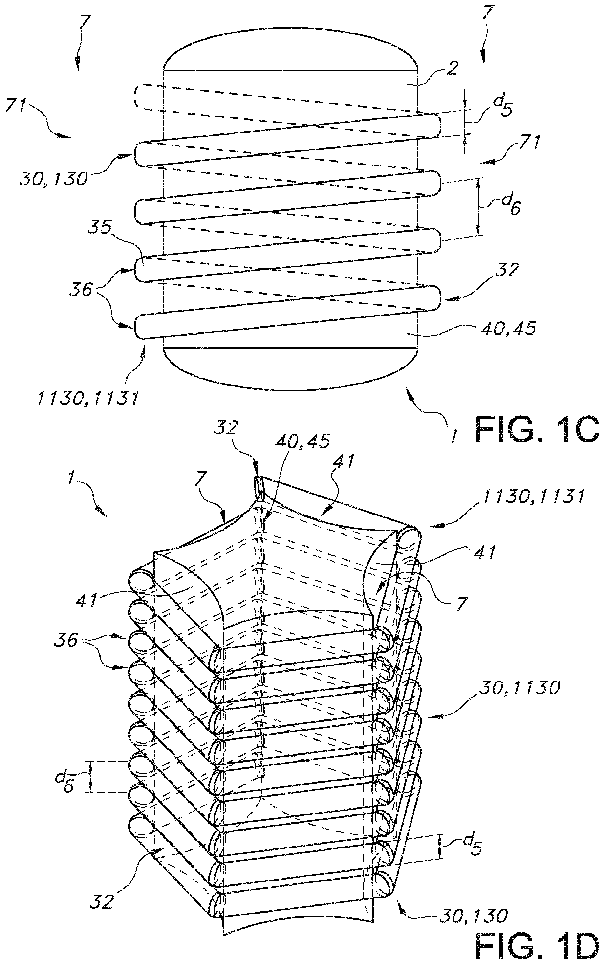

Figs. 1A and 1B depict a cross section of embodiments of the reactor assembly 1. The reactor 30 is a tubular reactor 130 configured in a tubular arrangement 1130, especially in a coiled tubular arrangement 1131. The coiled tubular arrangement 1131 may be depicted more clearly in Figs. 1C and 1D. As is indicated by the dashed lines connecting the solid lines depicting the windings 36, the tubular reactor 130 is helically coiled in both of the embodiments of Figs. 1C and 1D.

The (photo)reactor assembly 1 depicted in Figs. 1A and 1B comprises a light source arrangement 1010 comprising the plurality of light sources 10. This may also be indicated as: the plurality of light sources 10 are arranged in the light source arrangement 1010. The reactor wall 35 is especially configured in a radiation receiving relationship with the plurality of light sources 10. The light source radiation 11 provided by the light sources 10 may directly irradiate the fluid 100 arranged downstream of the reactor wall 35. In embodiments, the light source radiation may (also) travel from the light source 10 to the reactor wall 35 via a reflective element 1011.

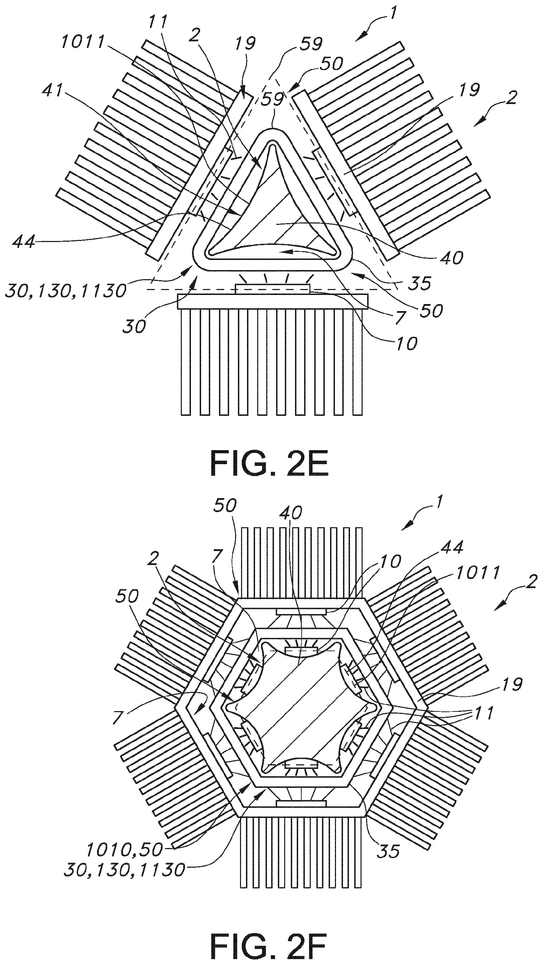

In the embodiment depicted in Fig. 1A, (all of) the plurality of light sources 10 enclose the tubular arrangement 1130. In the embodiment depicted in Fig. 1B (all of) the plurality of light sources 10 are enclosed by the tubular arrangement 1130. Yet, in other embodiments, a first subset of the plurality of light sources 10 encloses the tubular arrangement 1130 and a second subset of the plurality of light sources 10 is enclosed by the tubular arrangement 1130, see e.g., Fig. 2F.

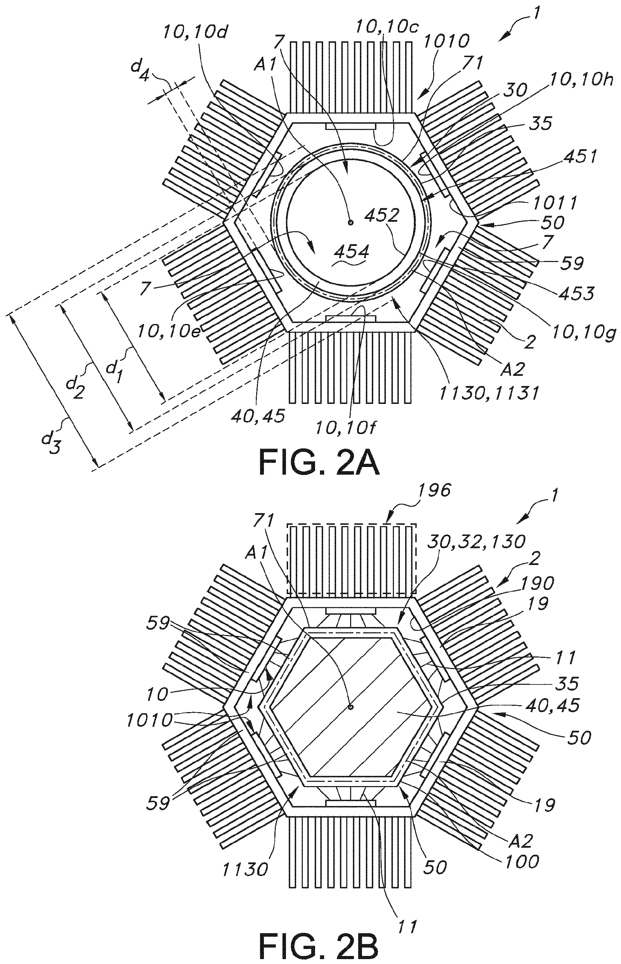

Fig. 1A further schematically depicts an embodiment wherein two or more of the plurality of light sources 10, 10a, 10b, 10c provide light source radiation 11 having different spectral power distributions, *i.e.,* for example, a first light source 10, 10a may provide light source radiation 11 having a different spectral power distribution from the light source radiation 11 provided by a second light source 10, 10b. For instance, a first light source 10, 10a may be configured to generate UV radiation and a second light source 10, 10b may be configured to generate visible radiation. In specific embodiments, the (photo)reactor assembly 1 may comprise two or more such light sources 10,10a,10b configured at different positions along an (tubular) arrangement axis A1. The arrangement axis A1 may e.g. be a length axis, or an axis of symmetry relative to the reactor. Hence, e.g. at different heights, different types of light sources 10 may be provided. In further embodiments, the (photoreactor) assembly 1 may comprise two or more such light sources 10,10a, 10c configured at different sides of the reactor, especially at the same position with respect to the arrangement axis A1 (e.g., at the same height). Hence, at different sides of the reactor 30, different types of light sources 10 may be provided. In Fig. 2A a further embodiment is depicted wherein two or more of the plurality of light sources 10, 10c, 10d, 10e, 10f, 10g, 10h provide light source radiation 11 having different spectral power distributions and/or are configured to radiate light source radiation with different intensities. One or more of the light sources 10, such as the light sources 10c, 10d, 10e, 10f, 10g, 10h, may in embodiments comprise a plurality of light emitting (radiating) segments radiating different intensities and/or different wavelength distributions. For instance, the light source 10c may comprise such plurality of light emitting segments (not depicted). The light source 10 and/or the light emitting segments may be arranged parallel to the tube axis A2 or, e.g., perpendicular to the tube axis A2.

However, Fig. 1A and Fig. 2A further schematically depicts in fact also an embodiment wherein two or more of the plurality of light sources 10, 10a, 10b, 10c and two or more of the plurality of light sources 10c, 10d, 10e, 10f, 10g, 10h, respectively provide light source radiation 11 having identical spectral power distributions. Hence, different options are possible.

Fig. 1B further depicts an embodiment wherein one or more of the plurality of light sources 10, especially all (depicted) light sources 10, are at least partly configured within at least one of the one or more fluid transport channels 7.

Fig. 1A further depicts an embodiment wherein successive windings (turns) 36 of the tubular reactor 130 may be arranged contacting each other substantially along a complete winding 36 (turn 36). The pitch d6 of the tubular reactor 130 may substantially equal a characteristic outer size d5 of the tube 32. In further embodiments (also see Figs. 1C and ID), the pitch d6 may be equal to or less than 10 times the outer size of the tube 32, such as equal to or less than 5 times the outer size of the tube 32. The pitch d6 may in embodiments e.g. be substantially 2 times the characteristic outer size d5 (especially leaving space for a further, especially parallel arranged, tube), see e.g. Fig. 1C. Yet, the pitch d6 may in embodiments be larger than 10, such as 50 or 100 times the characteristic outer size d5.

Fig. 1C schematically depicts a side view of an embodiment of the tubular reactor 130, wherein the tube 32 is coiled around the reactor support element 40, especially the support body 45, in a plurality of windings 36. In the depicted embodiment, the successive windings are spaced apart, *i.e.,* the pitch d6 of the tubular reactor 130 is larger than the characteristic outer size d5 of the tube 32, such as 2^{∗}d5 ≤ d6 ≤ 3^{∗}d5. Also in Fig. 1D, the successive windings 36 are spaced apart. In the embodiment, d5 is just a little smaller than d6 (d6 ≤ 1.5^{∗}d5).

Further, also in this embodiment, the reactor wall 35 defines part of a channel wall 71 of at least one of the one or more fluid transport channels 7.

In the depicted embodiments of Figs. 1A and 1B, the cooling system 90 comprises a fluid transporting device, especially a gas transporting device 96 (also "air transporting device" 96) selected from the group consisting of an air blower, an air sucker, and a fan 97. Hence, in embodiments, the fluid transporting device, especially the gas transporting device 96, may be configured to blow air (towards the reactor 30) or to suck air (from the reactor 30). The gas transporting device may be arranged above and/or below the reactor 30, i.e., in embodiments, the gas transporting device 96 may be arranged on a top section of the photoreactor assembly 1, and in further embodiments the gas transporting device 96 may be arranged on a bottom section of the photoreactor assembly 1.

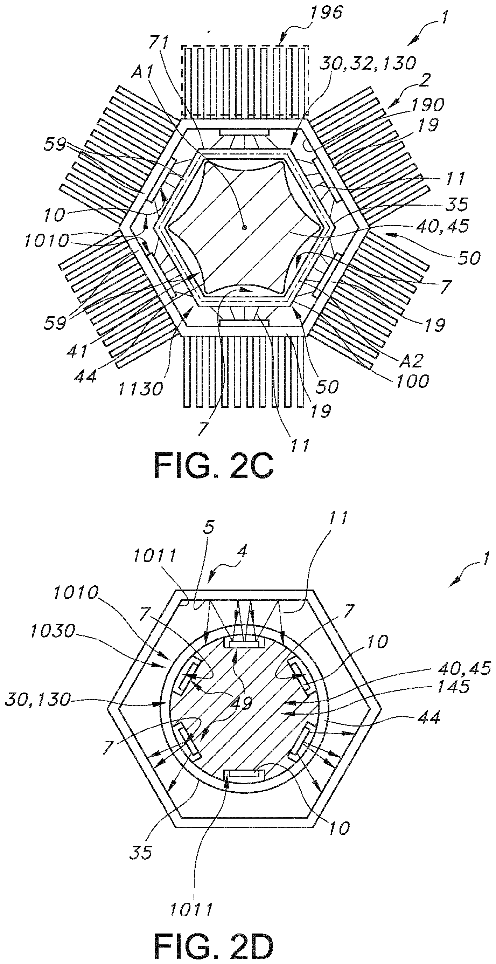

The light source arrangement 1130 and the tubular arrangement 1010 may be configured coaxially around the (tubular) arrangement axis A1. In embodiments, both the light source arrangement 1010 and the tubular arrangement 1130 comprise a cylindrical arrangement, see e.g. Fig. 2D. In further embodiments, one or more of the tubular arrangement 1130 and the light source arrangement 1010 defines a polygon 50. This is further depicted in Figs. 2A-2C and 2E-2G. In the embodiments of Figs. 2A-2C and 2E-2G, e.g. the light source arrangement 1010 defines the polygon 50. In most of these figures, the polygonal light source arrangement 1010 is clearly observable based on the arrangement of the light support element 19. In Fig. 2E, the light source arrangements 1010 defining the polygon 50 is further demonstrated by the (polygonal) dotted lines passing through the light sources 10. The embodiments of Fig. 2B, Fig. 2C and Figs. 2E-2F are examples of embodiments wherein the tubular arrangement 1130 and the light source arrangement 1010 both define polygons 50 having mutually parallel configured polygon edges 59. Moreover, in Fig. 2C the polygons 50 each comprise six polygon edges 59. In Fig. 2E, each polygon 50 comprises three polygon edges 59. The tubular arrangement 1130 may in embodiments define a circle or a cylinder, see e.g. Fig. 1C and Fig 2D. In the embodiment of Fig. 2D, the light source arrangement 1010 defines a circle.

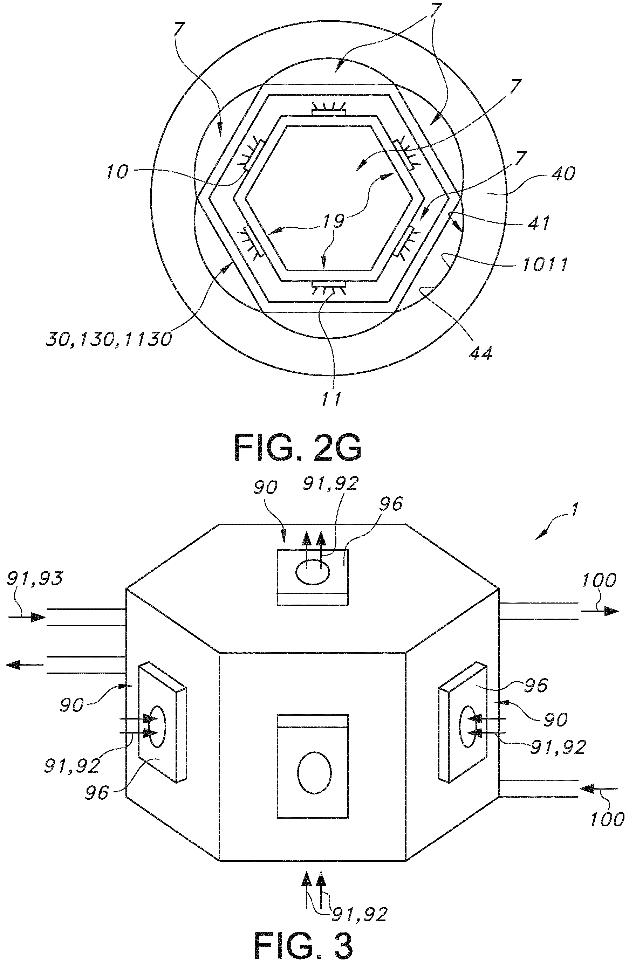

The embodiments depicted in the Figs. 1 and 2 further comprise a reactor support element 40 to support the reactor 30. The reactor support element 40 may comprise a support body 45. In the embodiments, the light support element 40 is configured rotational symmetrical (around the (tubular reactor) arrangement axis A1). Especially part of the tubular reactor 130 is configured in contact with the reactor support element 40, and another part of the tubular reactor 1130 and the reactor support element 40 define one or more (temperature control) fluid transport channel 7, as is depicted in Fig. 1D and Figs. 2C-2G. The fluid transport channels 7 may facilitate enhanced cooling of the reactor 30, especially if a cooling fluid 91 is flown through the channel 7. If desired, the one or more fluid transport channels 7 may (also) be used for heating (the reactor 30) by transporting a temperature control fluid 91 with a relative higher temperature through the fluid transport channels 7. In the embodiments depicted in Fig. 1C, 2A, and 2B the fluid transport channels 7 between the reactor support element 40 and the tube of the reactor 30 are not depicted to allow explaining some general aspects.

In the embodiments of Figs. 1 and Figs. 2, the (tubular) arrangement axis A1 and the tube axis A2 are configured almost perpendicular to each other. The embodiments of Figs. 1 and 2 further depict some further aspects of the fluid transport channel 7. In embodiments, the light sources 10 are at least partly configured within at least one of the one or more fluid transport channels 7 (see e.g. Figs. 2D and 2F). In further embodiments, at least part of the reactor wall 35 is configured within at least one of the one or more fluid transport channels 7. As such at least part of the reactor wall 35 may define part of a channel wall 71 of at least one of the one or more fluid transport channels 7, see e.g. the embodiments of Figs. 1B, 2C-2G. Additionally or alternatively, (at least a part of) the tubular reactor 130 and the reactor support element 40 define a fluid transport channel 7, as e.g. is depicted in Fig. 1D and (also) Figs. 2C-2G. In the embodiments of Figs. 2C-2F the tubular reactor 130 encloses the reactor support element 40. In Fig. 2G, the support element 40 encloses the tubular reactor 130. In all these embodiments at two or more positions the tubular reactor 130 and the reactor support element 40 are in physical contact with each other, and between two adjacent positions of the two or more positions the tubular reactor 130 and the reactor support element 40 are not in physical contact with each other. In most of these embodiments, the part that contacts the support element 40 is very small, only a few percent of the length of the tube. In the figures of the embodiments schematically shown in Figs. 2A and 2B this part is substantially 100%. In the embodiment of Fig. 2D, along the length of the tube about 50% of the tubular reactor 130 contacts the support element 40.

The light sources 10 may be arranged at a light source element 19, such as is indicated in Fig. 1A, and e.g. Figs. 2C and 2E-2G. Yet in embodiments, the reactor assembly 1 comprises a light source support element 140 configured to support the plurality of light sources 10. The light source support element 140 especially comprises a light source support body 145. Such light source support element 140, especially light source support body 145 may especially also comprise cooling element 95 such as a fluid transport channel 7. In Fig. 1B for instance an embodiment comprising the light source support body 145 is depicted. In the depicted embodiment, the light source support body 145 comprises one or more of the one or more fluid transport channels 7. In embodiments, the reactor support element 40, especially the reactor support body 45, may comprise or function as the light source support body 145, see e.g. Fig. 2D. In the embodiment of Fig. 2D one or more of the plurality of light sources 10 are associated to the reactor support element 40, and especially the one or more of the plurality of light sources 10 are configured between the reactor support element 40 and the tubular reactor 130. In the embodiment, (one or more) of the one or more of the light sources 10 are at least partly configured within the one or more fluid transport channels 7. In further embodiments, one or more of the one or more of the light sources 10 may be part of a wall of the recess 49 and especially define part of the one or more fluid transport channels 7.

The embodiments of Fig. 1A and Fig. 1B, further show a cooling system 90 comprising a fluid transporting device, especially a gas (or air) transporting device 96 comprising a fan 97. The fan 97 comprises ventilator blades 98 defining a blade diameter d3.

The reactor support element 40 and also the light source support element 140 may in embodiments comprise one or more fluid transport channels 7. Further, the tubular reactor 130 and the reactor support element 40 may define one or more fluid transport channels 7. The air transporting device 96 may be configured for providing the cooling fluid 91 through one or more of these fluid transport channels 7. The cooling fluid 91 may transfer the heat away from the support element 40 and/or the reactor 30. Additionally or alternatively, the support element 40 may comprise a heat sink to actively or passively cool the support element 40. The support element 40 may e.g. comprise a thermally conductive element 2 configured in (thermal) contact with the tubular reactor 130, which may facilitate dissipation of heat from the tubular reactor 130 to the support element 40. The thermally conductive element 2 may comprise a heat sink, optionally comprising fins. Such heat sinks (thermally conductive elements 2) are e.g. schematically indicated in many of the embodiments of Figs. 2 in thermal contact with the light sources 10. The thermally conductive element 2 of the support element 40 may also be defined by (at least a part of) the support element 40 comprising (or made of) a thermally conductive material.

Furthermore, Fig. 1A and 1D (as well as most of the embodiments of Figs. 2) depict embodiments wherein the tubular reactor 130 is coiled around the support element 40. Herein this may also be described as the reactor support element 40 encloses (at least part of) the tubular arrangement 1130. In Fig. 1B and Fig. 2G, the tubular reactor 130 is coiled inside the support element 40. Hence, in such embodiment the tubular reactor 130 encloses at least part of the reactor support element 40.

The support element 40 may be made of a thermally conductive material such as aluminum. The support element 40 may therefore be thermally conductive, and as such comprises, especially is, the thermally conductive element 2. Moreover, aluminum (but also other conductive materials, especially metals) may reflect the light source radiation 11. The surface 41 of the support element 40 is especially reflective for the light source radiation 11 and may therefore comprise the reflective element 1011. Moreover, reactor support element 40 may comprise a plurality of support element faces 44, and especially the support element faces 44 may comprise the reflective element 1011, which is schematically depicted in Figs. 2E and 2F. Moreover, in the embodiment, the reactor support element 40 comprises the reflective element 1011 at a side of the reactor support element 40 closest to the reactor 30. Hence, in such embodiment, the thermally conductive element 2 may comprise the reflective element 1011. In further embodiment, the surface 41 of the support element 40, especially the support element face 44 may comprise a thermally conductive coating that may be reflective for the light source light 11.

Figs. 2A and 2B depict some further general aspects of the reactor assembly 1. Fig. 2A, e.g., depicts an embodiment of the support element 40 comprising a support body 45. The support element 40 comprises a hollow (tubular) body, wherein the hollow body comprising a support body wall 451. The support body wall 451 comprises an inner support body face 452 and an outer support body face 453. In the depicted embodiment, the inner support body face 452 defines at least (also) one of the one or more fluid transport channels 7. Further, in the depicted embodiment, the reactor 30 is configured at the side of the outer support body face 453. In alternative embodiments, the reactor may be configured at the side of the inner support body face 452, especially wherein the reactor defines an (internal) fluid transport channel 7. In embodiments, see e.g. Fig. 2A, the inner support body face 452 may define a support body space 454, wherein 30-100 vol.%, especially 50-99 vol.%, of the support body space 454 is defined by the (internal) fluid transport channel 7. In the embodiment, the support body space 454 may be essentially an open ("hollow") space. However, in alternative embodiments, the support body space 454 may be partially filled with a filler material, such as filled with a thermally conductive material, especially wherein the filler material defines a plurality of fluid transport channels 7. The support body wall 451 may have a circular cross-section, especially wherein the inner support body face 452 and the outer support body face 453 define diameters d1,d2, respectively. Further a blade diameter d3 of ventilator blades 98 of a possible fan 97 is schematically depicted. The blade diameter d3 is in embodiments especially selected larger than the outer size of the support body 45 defined as d2.

Although not depicted in the figures, such (internal) fluid transport channel 7 may also be configured in embodiments comprising the support element face 44 with one or more recesses 49 and/or wherein the support element faces 44 are configured concavely relative to the tubular reactor 130, e.g. in the embodiments as depicted in Figs. 2C-2G.

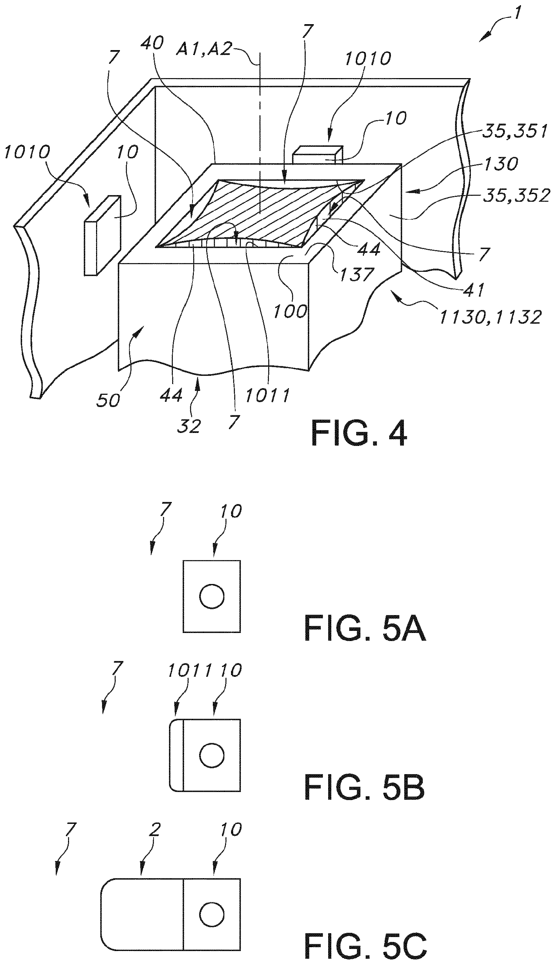

Figs. 2C-2E may further illustrate the recess 49 in the support element 40 and/or the concave configuration. The recess 49 is especially elongated, especially in a direction of the support element axis / the arrangement axis A1 and may connect extremes in of the support element 40. Recesses 49 may further essentially have any arbitrary shape. Moreover, the support element face 44 configured concavely relative to the tubular reactor 130, as such also defines a recess 49. In the embodiment of Fig. 2D, the reactor support element 40 has a cylindrical shape with one or more elongated recesses 49 parallel to a length axis of the cylindrical shape. The one or more recesses 49 and the tubular reactor 130 define the one or more fluid transport channels 7. In alternative embodiments (not shown) the reactor support has a polygonal shape such as in Fig. 2B, wherein the tubular reactor 130 and/or the tubular arrangement 1130 has a circular shape and/or comprises a cylindrical arrangement. As such, also in such embodiments, the reactor support element 40 and the tubular reactor 130 may define (at least a subset of) the one or more fluid transport channels 7. In the embodiments of Figs. 2C, and 2E-2G (and also Fig. 4), the plurality of support element faces 44 and the (part of the) tubular reactor 130 define (at least a subset of) the one or more fluid transport channels 7. Moreover, Figs. 2C, and 2E-2F also depict embodiments, wherein the reactor support element 40 defines a polygon 50, and wherein the tubular reactor 130 encloses at least part of the reactor support element 40.

It is further noted that the cylindrical support element 40 in Fig. 2D actually comprises one support element face 44 comprising the (six) recesses 49. Yet in other embodiments, the support element 40 may comprise a plurality of support element faces 44, wherein one or more of the support element faces 44 comprises one or more further recesses 49 (in the concave wall).

Fig. 2B and e.g. Fig. 2C further schematically depict embodiments, wherein the (photo)reactor assembly 1 comprises a plurality of light source elements 19, wherein each light source element 19 comprises one or more of the plurality of light sources 10, and wherein each of the light source elements 19 comprises at least one thermally conductive element 2 configured in functional, especially thermal, contact with the one or more of the plurality of light sources 10. The light source element 19 further comprises a reflective element 1011 at a surface 190 of the light source element 19 facing the reactor wall 35. In the depicted embodiments of Figs. 2B and 2C, the (photo)reactor assembly 1 further comprises a (second) fluid transporting device 196 configured to transport a cooling fluid 91 along one or more of the thermally conductive elements 2 configured in functional contact with one or more of the plurality of light sources 10. For visualization purposes, a single (second) fluid transporting device 196 is depicted very schematically. However, in further embodiments, each light source element 19 may be functionally coupled with a (respective) (second) fluid transporting device 196. A single (second) fluid transporting device 196 may also be functionally coupled with a plurality of light source elements 19. The second fluid transporting device 196 is especially a fluid transporting device 96.

In Figs. 2C-2G some further embodiments and aspects of the reactor assembly 1 are depicted. In the embodiments, e.g., different configurations of light sources 10 relative to the tubular arrangement 1130 are depicted. For instance, in Fig. 2C, the plurality of light sources 10 enclose the tubular arrangement 1130. In Fig. 2D, the plurality of light sources 10 are enclosed by the tubular arrangement 1130. Fig. 2F depicts an embodiment wherein (at least) a first subset of the plurality of light sources 10 enclose the tubular arrangement 1130 and (at least) a second subset of the plurality of light sources 10 are enclosed by the tubular arrangement 1130.

Further, the embodiments depicted in Figs. 2D and 2F show examples of embodiments wherein the reactor support element 40 comprises at least part of the plurality of light sources 10. To prevent light source radiation 11 from escaping from the photoreactor assembly 1, the embodiment of Fig. 2D (also) comprises a wall 4 with a reflective element 1011, especially a reflective surface 5 (facing the tubular reactor 130) enclosing the tubular reactor 130 and the light sources 10. The reflective element 1011 and/or reflective surface 5 is especially reflective for the light source radiation 11. The reflective element 1010 and/or surface 5 may reflect back any radiation that is not absorbed by the fluid 100. This may further provide an improved light homogeneity over the fluid 100 in the reactor 30.

Fig. 2G further depicts an embodiment of the reactor assembly 1 wherein the support element 40 is configured enclosing the tubular arrangement 1130. Also this depicted embodiment is configured to prevent light source radiation 11 from escaping. In this embodiment, the support element faces 44 comprise the reflective element 1011. Moreover, in the embodiment, the reactor support element 40 comprises the reflective element 1011 at a side of the reactor support element 40 closest to the reactor 30. The figure further illustrates different embodiments of the fluid transport channel 7. This may herein also be indicated as "a plurality of (different) (the) one or more different fluid transport channels 7". Based on the combination of these channels 7, the tubular reactor 130 may be cooled from different sides.

In Fig. 2G, e.g. a circular fluid transport channel 7 between the tubular reactor 130 and the light source elements 19 is defined by the tubular reactor 130 and the light source elements 19. Furthermore, between support element faces 44 and the tubular reactor 130 (also) six more fluid transport channels 7 are defined. Such fluid transport channel 7 may have a width d4, e.g. in the range of 1-5 mm, as depicted in Fig. 2A. Further, one central fluid transport channel 7 is defined by the six light source elements 19. Yet, in embodiments, see also e.g. Fig. 2A wherein a (straight) fluid transport channel 7 is (also) configured, especially as a through opening, in the support element 40, the width d1 may be larger than 5 cm. In further embodiments, fluid channels 7 may be defined in any of the thermally conductive elements 2.

The (photo)reactor assembly 1 may especially comprise one or more cooling elements 95, e.g., comprising one or more fluid transport channels 7 and/or one or more thermally conductive elements 2. The reactor support element 40, especially the support body 45, may especially be solid or hollow, especially comprising a cavity and/or a fluid transport channel 7. The reactor support element 40, especially the support body 45, may further comprise a heatsink, especially comprising fins. In embodiments, the reactor support element 40, especially the support body 45, is finned. The reactor support element 40, especially the support body 45, may thus be configured for facilitating a flow of a cooling fluid 91 (e.g. air 91,92 and/or water 91,93 or another cooling liquid 91,93) through and/or along the reactor support element 40.

Some further elements of the cooling system 90 are further depicted in Fig. 3. The cooling system 90 may comprise the cooling elements 95. The cooling system 90 is especially configured for transporting the cooling fluid 91 through one or more of the one or more fluid transport channels 7. Additionally or alternatively, the cooling system 90 may be configured to transport the cooling fluid 91 along one or more of the thermally conductive elements. The cooling system 90 may e.g. comprise an air (or gas) transporting device 96, such as a fan 98 or an air blower for blowing or sucking a gaseous fluid 91,92, especially air 91,92 through one or more of the fluid transport channels 7. Additionally or alternatively a liquid (cooling) fluid, 91, 93 may be used, and the cooling system 90 may comprise a pump for transporting the liquid cooling fluid 91,93. In the embodiment of Fig. 3, for instance, the (photo)reactor assembly 1 comprises an air (or gas) transport devices 96, such as a fan 97 on top of the reactor assembly 1, configured for transporting gas, especially air, through one or more of the fluid transporting channels. Further gas (or air) transporting devices 96 are arranged at the sides for providing air 92 along thermally conductive elements 2 in thermal connection with the light sources 10, such as heat sinks of the light source element 19. Further, a pump may be arranged to pump a liquid cooling fluid 91,93 through e.g. some of the fluid transport channels 7.

In Fig. 4, some aspects of a further embodiment of the (photo)reactor assembly 1 are depicted. In this embodiment, the reactor wall 35 of the tubular reactor 130 actually comprises a first reactor wall 351 and a second reactor wall 352 together defining the tubular reactor 130. Hence, in embodiments, the tube 32 may (also) have a first reactor wall 351 and a second reactor wall 352. Herein, such configuration is also called a double walled tube 32. Depending on the configuration of the light source arrangement 1010 (not depicted in the figure) the first reactor wall 351, the second reactor wall 352 or both walls 351, 352 are configured at least partly transmissive for the light source radiation 11. In this embodiment, the tubular arrangement defines the polygon 50 (a square). In alternative embodiments two coaxially arranged cylindrical tubes may define a cylindrical tubular reactor 130. In the embodiment, the fluid 100 may flow in the channel configured between the first (reactor) wall 351 and the second (reactor) wall 352. Herein, such channel is also referred to as (square) annulus 137. In the embodiment, fluid transport channels 7 are defined by the first reactor wall 351 and the support element 40. In the embodiment, the tube 32 of the tubular reactor 130 comprises 4 sections at the four sides of the support element 40, wherein each section together with the reactor support element 40 defines a fluid transport channel 7. The sections are in open fluid connection with each other over the entire annulus 137. In further embodiments, these sections may all define a single tube 32 (or a single tubular reactor section) together defining the tubular reactor 130. It will be understood that also other configurations are possible, e.g. wherein at each side of the support element 40 two, or more tubular reactor sections are configured, these two or more tubular reactor sections together with the support element 40 may define a single fluid transport channel 7.

In further embodiments, the tubular reactor 130 depicted in Fig. 4, may also be defined by a plurality parallel tubes 32, together defining the reactor 30 (not depicted). The tube axis A2 of the plurality of tubes 32 (as well as the tube axis A2 of the double walled tube 32) may especially also be configured parallel to the tubular arrangement axis A1. Yet, in embodiments, the plurality of tubes 32 in such embodiment may be configured at an angle with respect to the tubular arrangement axis A1. Such angle is especially an acute angle. Herein, the tubular arrangement 1130 of the double walled tube 32 or the (alternative) one described above comprising the plurality of tubes 32 is also named a straight tubular arrangement 1132.

Fig. 5A-C schematically depict further features of the (photo)reactor assembly 1. In particular, Fig. 5A-C schematically depict thermal contact between a light source 10 and a (cooling) fluid transport channel 7. In each of Fig. 1A-1C, the light source 10 and the fluid transport channel 7 are in functional contact, especially thermal contact, *i.e.,* the fluid transport channel 7 may facilitate cooling of the light source 10. In Fig. 5A, the light source 10 and the fluid transport channel 7 are in direct (fluid) contact. In Fig. 5B, the light source 10 and the fluid transport channel 7 are separated by a reflective element 1011, wherein the reflective element 1011, wherein heat may dissipate from the light source 10 to the fluid transport channel 7 via the reflective element 1011. In Fig. 5C, the light source 10 and the fluid transport channel 7 are separated by a thermally conductive element 2, such as a metal block, or such as fins. Hence, in such embodiment, heat may dissipate from the light source 10 to the fluid transport channel 7 via the thermally conductive element 2.

The (photo)reactor assembly 1 described herein may be used for treating the (reactor) fluid 100 with light source radiation 11. During use, the fluid 100 is provided in the reactor 30 and irradiated with the light source radiation 11. The method may comprise a batch process. Yet, the method may especially comprise a continuous process. During the continuous process, the fluid 100 is transported through the reactor 30 while irradiating the fluid 100 with the light source radiation 11. Simultaneously a cooling fluid 91 may be transported through and/or along one or more cooling elements 95 as is schematically depicted in Fig. 3.

Hence, the invention provides embodiments of a reactor 30 with light sources 10 that can easily be replaced (for instance when a certain reaction needs a specific wavelength region), and may have a very high efficiency, both in terms of light/radiation output versus power input of the source, and in capturing of the radiation by the reactants. In embodiments, the assembly 1 comprises a hexagonal or octagonal enclosure formed by six or eight light source elements 19 comprising a heatsink 2, each carrying one or more COBs. The heatsinks 2 may especially facilitate cooling of the light sources 10 and maintaining the COB 10 at a low temperature (for maximum efficiency).

In embodiments, a COB 10 (with or without phosphor) and/or an array of LEDs 10 (not necessarily of the same type) is configured on a heatsink 2 that is big enough to keep the COB 10 or LEDs 10 at a low temperature. For instance, three to ten of such heatsinks 2 (configured as light source elements 19) are slit into a frame in such a way that they form a polygonal structure 50 or enclosure. The fluid 100 containing (photosensitive) reactants may be flown through a (tiny) tube 32 that is coiled around a core comprising a support element 40 and/or support body 45 with the same polygonal shape 50 (in embodiments with rounded edges to prevent damaging of the tube 32 while coiling, taking the minimum bending radius of the tube into account, depending on the tube diameter d5). The support body 45 and tube 32 may in embodiments be placed in the enclosure from top or bottom side. The coiled tube 32 especially extends over the whole height of the enclosure, so all radiation 11 radiated by the sources 10 may imping on the coiled tube 32, and especially no light source radiation 11 will escape from top or bottom, or imping on other parts of the enclosure.

Hence, the invention especially relates to a flow reactor 30 for photochemical processes, especially to a reactor assembly 1 for hosting a fluid 100 to be treated with light source radiation 11. Especially wherein the light sources 10 can be cooled via the thermally conductive elements 2, such as heatsinks (that in embodiments can be equipped with fans 96 or a cooling fluid 91). The tube 32 with reactants may in embodiments can be cooled via the support element 40 configured enclosed by the tubular reactor 130 and/or configured enclosing the tubular reactor 130. The tube 32 with reactants may in further embodiments be cooled via a (forced) air flow 91 in the area between tube 32 and light sources 10 and/or the tube 32 and the support element 40. The support element 40 may comprises concave faces 44 instead of flat faces to allow a cooling fluid 91 flowing between the coiled tube 32 and the support element 40.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" includes also embodiments wherein the term "comprises" means "consists of'.

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A reactor assembly (1) comprising a reactor (30), wherein the reactor (30) is configured for hosting a fluid (100) to be treated with light source radiation (11) selected from one or more of UV radiation, visible radiation, and IR radiation, wherein the reactor (30) comprises a reactor wall (35) which is transmissive for the light source radiation (11), wherein:
- the reactor (30) is a tubular reactor (130), and wherein the reactor wall (35) defines the tubular reactor (130);
- the tubular reactor (130) is configured in a tubular arrangement (1130);
- the reactor assembly (1) further comprises a reactor support element (40), wherein (i) the reactor support element (40) encloses at least part of the tubular arrangement (1130) or wherein (ii) the tubular arrangement (1130) encloses at least part of the reactor support element (40),
- part of the tubular reactor (130) is configured in contact with the reactor support element (40), and wherein another part of the tubular reactor (130) and the reactor support element (40) define one or more fluid transport channels (7).

2. The reactor assembly (1) according to claim 1, wherein the tubular reactor (130) encloses the reactor support element (40), wherein at two or more positions the tubular reactor (130) and the reactor support element (40) are in physical contact with each other, and wherein between two adjacent positions of the two or more positions the tubular reactor (130) and the reactor support element (40) are not in physical contact with each other.

3. The reactor assembly (1) according to any one of the preceding claims, wherein the tubular arrangement (1130) defines a circle or a polygon (50).

4. The reactor assembly (1) according to any one of the preceding claims 1-3, wherein the reactor support element (40) has a polygonal shape, wherein the tubular arrangement (1130) has a circular shape, and wherein the reactor support element (40) and the tubular reactor (130) define the one or more fluid transport channels (7).

5. The reactor assembly (1) according to any one of the preceding claims 1-3, wherein the reactor support element (40) has a cylindrical shape with one or more elongated recesses (49) parallel to a length axis of the cylindrical shape, wherein the one or more recesses (49) and the tubular reactor (130) define the one or more fluid transport channels (7).

6. The reactor assembly (1) according to any one of the preceding claims, wherein the reactor support element (40) comprises a plurality of support element faces (44), wherein the support element faces (44) are configured concavely relative to the tubular reactor (130), wherein the plurality of support element faces (44) and the tubular reactor (1130) define the one or more fluid transport channels (7).

7. The reactor assembly according to claim 6, wherein the reactor support element (40) defines a polygon (50), wherein the tubular reactor (130) encloses at least part of the reactor support element (40).

8. The reactor assembly (1) according to any one of the preceding claims, wherein the reactor assembly (1) comprises a photoreactor assembly, wherein the reactor assembly (1) further comprises a light source arrangement (1010) comprising a plurality of light sources (10) configured to generate the light source radiation (11), wherein the reactor wall (35) is configured in a radiation receiving relationship with the plurality of light sources (10).

9. The reactor assembly (1) according to claim 8, wherein the plurality of light sources (10) comprises on or more of Chips-on-Board light sources (COB), Light emitting diodes (LEDs), and laser diodes.

10. The reactor assembly (1) according to any one of the preceding claims 8-9, wherein one or more of (i) at least a first subset of the plurality of light sources (10) enclose the tubular arrangement (1130) and (ii) at least a second subset of the plurality of light sources (10) are enclosed by the tubular arrangement (1130).

11. The reactor assembly (1) according to any one of the preceding claims 8-10, wherein one or more of (i) one or more of the tubular arrangement (1130) and the light source arrangement (1010) defines a polygon (50) and (ii) the tubular arrangement (1130) and the light source arrangement (1010) both define polygons (50) having mutually parallel configured polygon edges (59), wherein the polygons (50) each comprise 4-10 polygon edges (59).

12. The reactor assembly (1) according to any one of the preceding claims 8-11, wherein one or more of the plurality of light sources (10) are associated to the reactor support element (40), wherein the one or more of the plurality of light sources (10) are configured between the reactor support element (40) and the tubular reactor (130), and wherein the one or more of the light sources (10) define part of the one or more fluid transport channels (7) or are at least partly configured within the one or more fluid transport channels (7).

13. The reactor assembly (1) according to any one of the preceding claims, wherein the tubular arrangement (1130) comprises a coiled tubular arrangement (1131), wherein the tubular reactor (130) is helically coiled.

14. The reactor assembly (1) according to any one of the preceding claims, wherein the reactor assembly (1) comprises one or more cooling elements (95), wherein the one or more cooling elements (95) comprise the one or more fluid transport channels (7), wherein the reactor assembly (1) further comprises a cooling system (90) configured for transporting a cooling fluid (91) through one or more of the one or more fluid transport channels (7), wherein the cooling system (90) comprises an air transporting device (96) selected from the group consisting of an air blower and a fan (97).

15. A method for treating a fluid (100) with light source radiation (11), wherein the method comprises:
- providing the reactor assembly (1) according to any one of the preceding claims, wherein the reactor assembly (1) comprises the photoreactor assembly according to claim 8;
- providing the fluid (100) to be treated with the light source radiation (11) in the reactor (30);
- irradiating the fluid (100) with the light source radiation (11), and wherein the method further comprises:
- transporting the fluid (100) through the reactor (30) while irradiating the fluid (100) with the light source radiation (11) and transporting a cooling fluid (91) through one or more of the one or more fluid transport channels (7).
